# EUROPEAN PATENT APPLICATION

(11) **EP 1 555 818 A1**
(43) Date of publication of application: **20.07.2005**
(21) Application number: 03753972.3
(22) Date of filing: 01.10.2003
(51) Int. Cl.: H04N 5/92

(54) **INFORMATION RECORDING MEDIUM, INFORMATION RECORDING DEVICE AND METHOD, INFORMATION REPRODUCTION DEVICE AND METHOD, INFORMATION RECORDING/REPRODUCTION DEVICE AND METHOD, RECORDING OR REPRODUCTION CONTROL COMPUTER PROGRAM, AND DATA STRUCTURE CONTAINING CONTROL SIGNAL**

(30) Priority: 01.10.2002 JP 2002288266
(71) Applicant: Pioneer Corporation, Tokyo 153-8654 (JP)
(72) Inventor: TAKAKUWA, Nobuyuki, Pioneer Corporation, Tokorozawa-shi, Saitama 359-8522 (JP); FUKUDA, Yasuko, Pioneer Corporation, Tokorozawa-shi, Saitama 359-8522 (JP); SAWABE, Takao, Pioneer Corporation, Tokorozawa-shi, Saitama 359-8522 (JP); KANEGAE, Tohru, Pioneer Corporation, Tokorozawa-shi, Saitama 359-8522 (JP); NAKAHARA, Masanori, Pioneer Corporation, Tokorozawa-shi, Saitama 359-8522 (JP); KODA, Takeshi, Pioneer Corporation, Tokorozawa-shi, Saitama 359-8522 (JP)
(74) Representative: Haley, Stephen
(86) International application number: PCT/JP2003/012581
(87) International publication number: WO 2004/032496

(57) **Abstract**

In an information recording medium, object data made into a stream including those composed of a plurality of angle video information is recorded. Each of the angle video information, for example, is made of a set of GOPs. Each of the GOPs is segmented and stored in a packet. In an object data file, a switch unit as a logical delimiter for angle switching on the reproduction time axis is defined so that a plurality of packets containing the same GOP segmented will not be placed astride the boundary of the switch unit and the GOP which can be reproduced without using the GOP belonging to a switch unit preceding over the switch unit boundary is arranged as a first GOP of the switch unit in question.

## Description

### Technical Field

The present invention relates to: an information record medium, such as a high density optical disc, capable of recording thereon various information such as main picture information or video information, audio information, sub-picture information, reproduction control information, and so on, at high density; an apparatus for and a method of recording the information onto the information record medium; an apparatus for and a method of reproducing the information from the information record medium; an apparatus and a method capable of both recording and reproducing the information; a computer program for controlling the recording or reproduction; and a data structure including a control signal for controlling the reproduction.

### Background Art

DVDs become common as optical discs onto which various information such as main picture information, audio information, sub-picture information, reproduction control information and so on is recorded. According to a DVD standard, the main picture information (video data), the audio information (audio data) and the sub-picture information (sub-picture data) are packetized each with the reproduction control information (navigation data) and are multi-recorded onto a disc in a program stream format of MPEG 2 (Moving Picture Experts Group phase 2), which is a high performance encoding technology. Among them, the main picture information has data, which is compressed in a MPEG video format (ISO 13818-2), for one stream in one program stream. On the other hand, the audio information is recorded in a plurality of formats (i.e. linear PCM, AC-3, MPEG audio and so on) and has data for up to 8 streams in one program stream. The sub-picture information is defined by a bitmap, and is compressed and recorded in a run length method, and has data for up to 32 streams in one program stream.

On the other hand, a transport stream format of MPEG2 standard is coming to be standardized, which is suitable for data transfer. According to the transport stream format, a plurality of elementary streams are transferred at the same time. For example, a plurality of programs, such as a plurality of satellite digital broadcasting channels in one satellite radio wave, are transmitted at the same time in a TDM (Time Division Multiplex) scheme.

This type of DVD is capable of an "angle reproduction", which records a plurality of video informations relating to a scene or image (hereinafter referred to as an "angle" as appropriate) viewed from a plurality of viewpoints onto a same disc, and reproduces an angle desired to watch by a user. For this, according to this type of DVD, a plurality of video informations corresponding to each angle are interleaved with each other by unit of interleaved unit (ILVU). In a navigation packet (NV_PCK) disposed at head of a video object unit (VOBU) composing each interleaved unit, an angle information (SML_AGLI) indicating a size and an address of an interleaved unit to be reproduced next for each angle is stored.

### Disclosure of Invention

In the aforementioned DVD, an address map (VTS_VOBU_ADMAPI), in which address information about a video object unit (VOBU) is stored, is used to access the video information. Therefore, even if a reproduction entry is in an interleaved block, an access is made to a head of the interleaved unit, so that the video information in the interleaved unit is reproduced after a navigation packet is reproduced.

However, in a record format for a large volume high density optical disc under development of the present applicant, a time map (referred to as an "ES address information" in the present embodiment), in which a packet number corresponding to each display start time is stored, is used to access the video information. Therefore, if a reproduction entry is in an interleaved unit, an access is made to a mid of the interleaved unit, so that the vide information is reproduced without reproducing a navigation packet. This makes it unknown which interleaved unit is to be reproduced next. As a result, it is difficult, from a technical viewpoint, to perform an angle switching "seamlessly" without discontinuity of the video information (herein referred to as a "seamless angle reproduction" as appropriate).

Additionally, if an angle reproduction is performed by using an interleaved unit, a "jump" processing to jump or skip reading the interleaved unit is enforced to a DVD player. For this, a packet of an audio stream (i.e. audio packet) corresponding to a video stream, which composes contents such as a movie, needs to be duplicated or replicated and disposed for every interleaved unit. As a result, the authoring operation becomes complicated, which is a technical problem.

The present invention has been accomplished in view of the above problems for example. It is therefore an object of the present invention to provide an information record medium, an information record apparatus and method, an information reproduction apparatus and method, an information record reproductionrecord reproduction apparatus and method, a computer program for a record or reproduction control, and a data structure including a control signal, which enable a seamless angle switching among a plurality of video streams or video streams composing a TS (transport stream) without using the interleaved unit for example.

The above object of the present invention is achieved by an information record medium onto which a whole stream including a plurality of partial streams each comprising a series of content information is multi-recorded by a unit of a packet that is a physically accessible unit, said medium comprising: an object data file for storing object data comprising a plurality of packets each storing a piece of the content information and being multiplexed by the unit of the packet; and an object information file for storing association definition information to define a relationship between multiplexed packets and the plurality of partial streams, as reproduction control information to control a reproduction of said object data file, wherein the plurality of partial streams include a plurality of video streams comprising a plurality of angle video informations corresponding to a plurality of viewpoints, each of the plurality of angle video informations comprises an assembly of minimum image units, which are individually reproducible and defined by a predetermined standard, each of the minimum image units is divided and stored into the packets in said object data file, and in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

According to the information record medium of the invention, the object data file stores object data consisting of a plurality of packets each storing pieces of the content informations. Usually, the object data is a unit logically accessible by the information reproduction apparatus. The content information includes audio information (e.g. audio sound of a movie and the like) and sub-picture information (e.g. caption of a movie and the like), in addition to a plurality of video information. The object information file stores relation definition information (e.g. an ES map table and the like, as mentioned later) including information indicating a packet corresponding to each display start time, for each of a plurality of video information. Therefore, at the reproduction of the information record medium, the object data is recorded separately onto the information record medium for example. For example, they are reproduced in a predetermined sequence, according to reproduction sequence information such as play list information and the like stored in a reproduction sequence information file such as play list information file. In this case, object data relating to a desired stream among a plurality of partial streams are selectively reproduced, according to the relation definition information such as an ES map table.

A plurality of partial streams reproduced selectively as such include a plurality of video streams consisting of a plurality of angle video information corresponding to a plurality of viewpoints. Each of a plurality of angle video information is made of a collection of minimum video units each reproducible alone and defined by a predetermined standard, such as GOPs based on a MPEG2 standard.

Each of minimum video units such as GOPs is divided into packets and stored in the object data file. More specifically, one I picture (Intra-coded picture) composing the GOP for example is divided into a plurality of packets and stored. Also one P picture (Predictive-coded picture) is divided into a plurality of packets and stored. Also one B picture (Bidirectionally predictive-coded picture) is divided into a plurality of packets and stored. For example, one GOP is made of a few to a few tens of pictures, depending on the video contents, and thereby is divided as a whole into a plurality of packets to be stored.

Particularly in this invention, a switch unit is defined as a logical section for an angle switching on a reproduction time scale or axis in the object data file. Herein, a plurality of packets for dividing and storing the same minimum video unit is defined not to extend over a boundary of the switch unit. For example, packets belonging to the same GOP exist in the same switch unit. Furthermore, the minimum video unit reproducible without the aid of the minimum video unit belonging to an anterior switch unit extending over the boundary of the switch unit is defined to be arranged as a first minimum video unit of the switch unit. For example, a first GOP of the switch unit starts from an I picture, and reproducible without any of I, P and B picture belonging to another GOP of the anterior switch unit.

Therefore, when an angle switching is performed during the reproduction of the information record medium, once an operational command for an angle switching is issued by a user operation via a remote controller, control panel and the like, the video stream to be reproduced is not switched instantly but switched after the reproduction until the boundary of the switch unit is completed as a logical section for an angle switching. Then, a switch unit #i+1 (i=1, 2, 3, ...) to be reproduced next to the switch unit #i whose reproduction is completed is reproducible without minimum video units whose first unit belongs to the switch unit #i. Furthermore, a plurality of packets for dividing and storing the same minimum video unit does not extend over the boundary between the switch units #i and #i+1. Therefore, following the completion of the reproduction of the switch unit #i+1, the switch unit #i+1 can be reproduced appropriately and sequentially from a packet to be firstly reproduced. That is, by performing an angle switching from the switch unit #i to the switch unit #i+1 at the boundary of the switch unit, while angle video information for relatively short time can be reproduced via a buffer for a seamless reproduction, a seamless angle reproduction can be easily achieved. In order to shorten a response time for a switching during such a seamless angle reproduction, it is sufficient to shorten a length of the aforementioned switch unit. In practice, the length is preferably within 1.5 seconds.

As a result, according to the present invention, a seamless angle switching or a seamless angle reproduction can be achieved, without the aid of an interleaved unit.

For example, a transfer rate of an optical disc whose recording density and recording speed are recently in progress may be expected as an order of 32Mbps. Therefore, if a transfer rate of one video stream is 5Mbps, a switching of 5 to 6 angles can be achieved seamlessly and sufficiently with the aid of the information record medium of the invention. Alternatively, if a transfer rate of one video stream is 10Mbps, a switching of 2 to 3 angles can be achieved seamlessly and sufficiently with the aid of the information record medium of the invention.

The "angle switching" according to the present invention indicates not only an angle switching in a narrow meaning among a plurality of videos providing one scene from a different angles, but also an angle switching in a broad meaning among a plurality of video information having or not having a special relationship to each other. In any case, the effect of the present invention is obtained, insofar as a switching among a plurality of video information needs to be seamless or speedy.

A length (data amount) of the switch unit corresponds to a length of a minimum video unit such as a GOP when it is shortest, for example a few tenth seconds to a few seconds as the reproduction time. Then, the length of the switch unit may vary depending on the contents of the content information (e.g. motion extent of a motion picture indicated by the video information). Alternatively, it may be fixed.

Incidentally, various information stored in the reproduction sequence information file or the object information file according to the present invention is preferably not multiplexed by the unit of the packet on the information record medium, different from a case of the object data file. Therefore, on the basis of the reproduction control information or the reproduction sequence information, the information reproduction apparatus can reproduce the object data. A packet address according to the present invention may be a physical address, but typically a logic address. An actual physical address is defined uniquely from a logic address, under control of the file system.

In an aspect of the information record apparatus according to the present invention, the minimum image unit is a GOP (Group of Picture) based on a MPEG (Moving Picture Experts Group) standard.

According to this aspect, a plurality of packets for dividing and storing the same GOP does not extend over the boundary of the switch unit. Furthermore, a GOP reproducible without the aid of a GOP belonging to an anterior switch unit extending over the boundary is arranged at the head of the switch unit. Therefore, a seamless angle reproduction can- be achieved without the aid of an interleave. Incidentally, although a GOP is typically standardized by "MPEG2" standard, it may be based on another MPEG standard other than MPEG2.

In another aspect of the information record medium according to the present invention, the switch unit is defined by position information, the position information indicating a head address of the switch unit.

According to this aspect, the seamless angle switching is achieved, by performing the angle switching at the boundary of the switch unit, on the basis of the position information which indicates the head address of the switch unit, at the reproduction of the information record medium.

Incidentally, the switch unit may be defined by position information which indicates a rear-most address of the switch unit. This also allows the boundary of the switch unit to be identified on the reproduction.

In this aspect, the position information may be stored for each switch unit, in a switch unit address table constructed in the object information file.

In this arrangement, the position information which indicates the head of the switch address can be obtained for each switch unit by firstly reproducing the object information file and then referring to the switch unit address, in order to reproduce the information record medium. According to this, it is possible to perform the seamless angle switching relatively efficiently.

In this aspect, the position information may be stored for each switch unit, in a navigation packet forming a part of the partial streams in the object data file.

In this arrangement, the position information which indicates the head of the switch address can be obtained for each switch unit, by referring to the navigation packet forming a part of the video stream relating to the angle video information or the partial stream relating to another control information, before or after the reproduction of the angle video information, in order to reproduce the information record medium. According to this, it is possible to perform the seamless angle switching relatively efficiently.

Further in this case, the position information as for anterior n (n is natural number equal to or more than 1) switch units and posterior m (m is natural number equal to or more than 1) switch units, with respect to a switch unit to which the navigation packet is belonged as a standard, is stored in the navigation packet.

In this arrangement, the position information which indicates the head of the switch address, with regard to the n-units-anterior or m-units-posterior switch unit relative to the switch unit to which the navigation packet is belonged, by referring to the navigation packet before or after the reproduction of the angle video information. In this case, controlling or adjusting the number of units, such as the "n-units" or the "m-units" makes it possible to selectively obtain the position information having a strong relationship with the presently reproduced switch unit, while the increase of the data amount of each navigation packet is avoided. Therefore, it is possible to perform the seamless angle switching efficiently.

In an aspect of such a navigation packet, the navigation packet may be arranged as a head packet of the switch unit.

In this arrangement, the navigation packet is firstly reproduced, in order to reproduce the switch unit. Therefore, it is possible to selectively obtain the position information having a strong relationship with the presently reproduced switch unit, via the navigation packet. Therefore, it is possible to perform the seamless angle switching very efficiently.

In an aspect of such position information, the position information may be a serial number of the packets or a PTS (Presentation Time Stamp).

In this arrangement, the head address of the switch unit can be identified, for example by the serial number of packets sequentially assigned within various ranges such as within the object file or within the title, or by the PTS on the reproduction time scale.

In another aspect of the information record medium according to the present invention, the association definition information has table information, the table information indicating, for each partial stream, packet identification numbers assigned specifically to a plurality of packets multiplexed at a same time.

In this aspect, in accordance with the table information in the association definition information, for example, on the basis of a packet identification number specific to each partial stream, it is possible to reproduce packets relating only to a desired partial stream. Then, for the angle switching, it is possible to perform the angle switching by switching from a process of reproducing sequentially packets to which packet identification numbers specific to the video stream relating to one angle video information are assigned, to a process of reproducing sequentially packets to which packet identification numbers specific to the video stream relating to another angle video information are assigned. Furthermore, since such a switching is performed at the boundary of the switch unit, it is performed as a seamless angle switching.

In another aspect of the information record medium according to the present invention, the medium further comprises a reproduction sequence file for storing reproduction sequence information to define a reproduction sequence of the object data.

According to this aspect, the object data stored in the object date file is reproduced in the reproduction sequence or reproduction procedure defined by the reproduction sequence information (e.g. play list information) stored in the reproduction sequence information file. Then, it is possible to reproduce relatively efficiently the contents exactly as intended by the contents maker.

The above object of the present invention is achieved by an information record apparatus for multi-recording a whole stream including a plurality of partial streams each comprising a series of content information by a unit of a packet that is a physically accessible unit, onto an information record medium, said apparatus comprising: a first record device for recording an object data file, the object data file storing object data comprising a plurality of packets each storing a piece of the content information and being multiplexed by the unit of the packet; and a second record device for recording an object information file, the object information file storing association definition information to define a relationship between multiplexed packets and the plurality of partial streams, as reproduction control information to control a reproduction of said object data file, wherein the plurality of partial streams include a plurality of video streams comprising a plurality of angle video informations corresponding to a plurality of viewpoints, each of the plurality of angle video informations comprises an assembly of minimum image units, which are individually reproducible and defined by a predetermined standard, each of the minimum image units is divided and stored into the packets in said object data file, and in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

According to the information record apparatus of the invention, the first record device, such as a controller, encoder, TS object generator (mentioned later), optical pickup or cutting device, records the aforementioned object data file according to the present invention, onto the information record medium, such as a DVD and the like. The second record device, such as a controller, encoder, optical pickup or cutting device, records the aforementioned object information file according to the present invention, onto the information record medium, such as a DVD and the like.

Therefore, the information record medium according to the present invention as mentioned above (including various aspects thereof) can be recorded relatively efficiently.

Incidentally, the information record apparatus according to the present invention may also take various aspects, corresponding to aforementioned various aspects of the information record medium according to the present invention.

The above object of the present invention is achieved by an information record method of multi-recording a whole stream including a plurality of partial streams each comprising a series of content information by a unit of a packet that is a physically accessible unit, onto an information record medium, said method comprising: a first record process of recording an object data file, the object data file storing object data comprising a plurality of packets each storing a piece of the content information being multiplexed by the unit of the packet; and a second record process of recording an object information file, the object information file storing association definition information to define a relationship between multiplexed packets and the plurality of partial streams, as reproduction control information to control a reproduction of said object data file, wherein the plurality of partial streams include a plurality of video streams comprising a plurality of angle video informations corresponding to a plurality of viewpoints, each of the plurality of angle video informations comprises an assembly of minimum image units, which are individually reproducible and defined by a predetermined standard, each of the minimum image units is divided and stored into the packets in said object data file, and in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

According to the information record method of the invention, the first record process records the aforementioned object data file according to the present invention and the second record process records the aforementioned object information file according to the present invention, on the information record medium such as a DVD or the like, with the aid of the controller, encoder, TS object generator (mentioned later), optical pickup or cutting device.

Therefore, the information record medium according to the present invention as mentioned above (including various aspects thereof) can be recorded relatively efficiently.

Incidentally, the information record method according to the present invention may also take various aspects, corresponding to aforementioned various aspects of the information record medium according to the present invention.

The above object of the present invention is achieved by an information reproduction apparatus for reproducing the aforementioned information record medium (including various aspects), the apparatus comprising: a reproduction device for reproducing the object data file and the object information file; an input device for inputting externally an instruction for an angle switching; a control device for controlling the reproduction device to reproduce a video stream relating to one angle video information in the object data file, on the basis of the association definition information included in the object information file reproduced by the reproduction device, and to switch from a reproduction of a video stream relating to said one angle video information to a reproduction of a video stream relating to another angle video information, at a boundary of the switch unit, in accordance with the instruction for the angle switching inputted via the input device.

According to the information reproduction apparatus of the invention, the reproduction device, such as a decoder, demultiplexer, optical pickup, can reproduce the object data file and the object information file. The input device, such as a remote controller, a button, key or switch on a control panel, can input the instruction for the angle switching, externally. The control device, such as a controller, controls the reproduction device to reproduce the video stream relating to one angle video information, on the basis of the association definition information. Once the instruction for the angle switching is inputted via the input device during the reproduction, the control device is controlled to switch from the reproduction of the video stream relating to said one angle video information to a reproduction of the video stream relating to another angle video information, in response to this instruction for the angle switching. Particularly, this switching is performed at the boundary of the switch unit.

Therefore, the information record medium according to the present invention as mentioned above (including various aspects thereof) can be reproduced relatively efficiently.

Incidentally, the information reproduction apparatus according to the present invention may also take various aspects, corresponding to the aforementioned various aspects of the information record medium according to the present invention.

The above object of the present invention is achieved by an information reproduction method of reproducing the aforementioned information record medium (including various aspects) and implemented by an information reproduction apparatus having (i) a reproduction device for reproducing the object data file and the object information file and (ii) an input device for inputting externally an instruction for an angle switching, the method comprising: a first control process of controlling the reproduction device to reproduce a video stream relating to one angle video information in the object data file, on the basis of the association definition information included in the object information file reproduced by the reproduction device, and a second control process of controlling the reproduction device to switch from a reproduction of a video stream relating to said one angle video information to a reproduction of a video stream relating to another angle video information, at a boundary of the switch unit, in accordance with the instruction for the angle switching inputted via the input device.

According to the information reproduction method of the invention, the first control process controls, with the aid of a controller or the like for example, the reproduction device, such as the decoder, demultiplexer, optical pickup, to reproduce the video stream relating to one angle video information, on the basis of the association definition. Once the instruction for the angle switching is inputted via the input device, such as the remote controller, the button, key or switch on the control panel, during the reproduction, the second control process, controls the reproduction device to switch from the reproduction of the video stream relating to said one angle video information to a reproduction of the video stream relating to another angle video information, in response to the instruction for the angle switching. Particularly, this switching is performed at the boundary of the switch unit.

Therefore, the information record medium according to the present invention as mentioned above (including various aspects thereof) can be reproduced relatively efficiently.

Incidentally, the information reproduction method according to the present invention may also take various aspects, corresponding to aforementioned various aspects of the information record medium according to the present invention.

The above object of the present invention is achieved by an information record reproduction apparatus for multi-recording and reproducing a whole stream including a plurality of partial streams each comprising a series of content informations by a unit of a packet that is a physically accessible unit, onto an information record medium, the apparatus comprising: the aforementioned information record apparatus and the aforementioned information reproduction apparatus.

According to the information record reproduction apparatus of the invention, since it has both function of the aforementioned information record apparatus and information reproduction apparatus according to the present invention, it can record or reproduce the aforementioned information record medium according to the present invention (including various aspects) relatively efficiently.

Incidentally, the information record reproduction apparatus according to the present invention may also take various aspects, corresponding to aforementioned various aspects of the information record medium according to the present invention.

The above object of the present invention is achieved by an information record reproduction method of multi-recording and reproducing a whole stream including a plurality of partial streams each comprising a series of content informations by the unit of the packet that is a physically accessible unit, onto an information record medium and implemented by an information record reproduction apparatus having (i) a reproduction device for reproducing the object data file and the object information file and (ii) an input device for inputting externally an instruction for an angle switching, the method comprising: the aforementioned information record method according to the present invention and the aforementioned information reproduction method according to the present invention.

According to the information record reproduction method of the invention, since it has both of the information record method of the invention and the information reproduction method of the invention, which are mentioned above, it is possible to record and reproduce the information record medium of the invention (including various aspects), which is mentioned above, relatively efficiently.

Incidentally, the information reproduction method according to the present invention may also take various aspects, corresponding to aforementioned various aspects of the information record medium according to the present invention.

The above object of the present invention is achieved by a computer program for a record control to control a computer disposed at the aforementioned information record apparatus according to the present invention (including various aspects), the program making the computer function as at least a part of the first record device and the second record device.

According to the computer program for the record control of the invention, the aforementioned information record apparatus of the invention may be embodied relatively easily, by reading and running the computer program from a record medium, such as a ROM, a CD-ROM, a DVD-ROM, a hard disk and so on, storing the computer program therein/thereon, or by downloading the computer program to the computer via the communication device and running it.

Incidentally, the computer program for the record control may also take various aspects, corresponding to aforementioned various aspects of the information record medium according to the present invention.

The above object of the present invention is achieved by a computer program for a reproduction control to control a computer disposed at the information reproduction apparatus according to the present invention (including various aspects), the program making the computer function as at least a part of the reproduction device, the input device and the control device.

According to the computer program for the reproduction control of the invention, the aforementioned information record apparatus of the invention may be embodied relatively easily, by reading and running the computer program from a record medium, such as a ROM, a CD-ROM, a DVD-ROM, a hard disk and so on, storing the computer program therein/thereon, or by downloading the computer program to the computer via the communication device and running it.

Incidentally, the computer program for the reproduction control may also take various aspects, corresponding to aforementioned various aspects of the information record medium according to the present invention.

The above object of the present invention is achieved by a computer program for a record reproduction control to control a computer disposed at the information record reproduction apparatus according to the present invention (including various aspects), the program making the computer function as at least a part of the first record device, the second record device, the reproduction device, the input device and the control device.

According to the computer program for the record reproduction control of the invention, the aforementioned information record apparatus of the invention may be embodied relatively easily, by reading and running the computer program from a record medium, such as a ROM, a CD-ROM, a DVD-ROM, a hard disk and so on, storing the computer program therein/thereon, or by downloading the computer program to the computer via the communication device and running it.

Incidentally, the computer program for the record reproduction control may also take various aspects, corresponding to aforementioned various aspects of the information record medium according to the present invention.

The above object of the present invention is achieved by a data structure including a control signal, wherein a whole stream including a plurality of partial streams each comprising a series of content information is multi-recorded by-a unit of a packet that is a physically accessible unit, said structure comprising: an object data file for storing object data comprising a plurality of packets each storing a piece of the content information and being multiplexed by the unit of the packet; and an object information file for storing association definition information to define a relationship between multiplexed packets and the plurality of partial streams, as reproduction control information to control a reproduction of said object data file, wherein the plurality of partial streams include a plurality of video streams comprising a plurality of angle video informations corresponding to a plurality of viewpoints, each of the plurality of angle video informations comprises an assembly of minimum image units, which are individually reproducible and defined byon the basis of a predetermined standard and reproducible independently, each of the minimum image units is divided and stored into the packets in said object data file, and in the object data file, a switch unit as a logical section for an angle switching on a reproduction time scale is defined so such that the plurality of packets for dividing and storing the divided minimum image unit pieces obtained by dividing a same minimum image unit does not extend over a boundary of the switch unit, and such that a minimum image unit reproducible without using another minimum image unit belonging to an anterior switch unit extending over the boundary of-the switch unit is arranged as a first minimum image unit of the switch unit.

According to the data structure including the control signal of the invention, it is possible to perform the seamless angle switching or the seamless angle reproduction, without using the interleaved unit, similarly to the case of the information record medium of the invention mentioned above.

Incidentally, the data structure including the control signal according to the present invention may also take various aspects, corresponding to aforementioned various aspects of the information record medium according to the present invention.

The above object of the present invention is achieved by a computer program product for a record control in a computer-readable medium for tangibly embodying a program of instructions executable by a computer disposed at the aforementioned information record apparatus according to the present invention (including various aspects), the program making the computer function as at least a part of the first record device and the second record device.

The above object of the present invention is achieved by a computer program product for a reproduction control in a computer-readable medium for tangibly embodying a program of instructions executable by a computer disposed at the information reproduction apparatus according to the present invention (including various aspects), the program making the computer function as at least a part of the reproduction device, the input device and the control device.

The above object of the present invention is achieved by a computer program product for a record reproduction control in a computer-readable medium for tangibly embodying a program of instructions executable by a computer disposed at the information record reproduction apparatus according to the present invention (including various aspects), the program making the computer function as at least a part of the first record device, the second record device, the reproduction device, the input device and the control device.

According to the computer program product for the record control, the reproduction control, or the record reproduction control of the invention, at least a part of the first record device, the second record device, the reproduction device, the input device and the control device according to the present invention mentioned above may be embodied relatively easily, by reading and running the computer program product from a record medium, such as a ROM, a CD-ROM, a DVD-ROM, a hard disk and so on, storing the computer program therein/thereon, or by downloading the computer program product to the computer via the communication device and running it. More specifically, the computer program product may be made of computer readable codes (or computer readable commands) to make the computer function as at least a part of the first record device, the second record device, the reproduction device, the input device and the control device.

These effects and other advantages of the present invention become more apparent from the following embodiments and examples.

### Brief Description of Drawings

FIG. 1 illustrates, in its upper part, a general plan view of an optical disc as an embodiment of the information record medium of the present invention; and illustrates, in its lower part, a schematic conceptual diagram of an area structure in a radius direction corresponding to the general plan view in the upper part.
FIG. 2 illustrates a schematic conceptual diagram (FIG. 2(a)) of a conventional program stream of MPEG2; a schematic conceptual diagram (FIG. 2(b)) of a transport stream of MPEG2 used in the embodiment; and a schematic conceptual diagram (FIG. 2 (c)) of a program stream of MPEG2 used in the embodiment.
FIG. 3 is a diagram schematically illustrating a data structure recorded on the optical disc in the embodiment.
FIG. 4 is a conceptual diagram hierarchically illustrating a detail of a data structure in each title shown in FIG. 3.
FIG. 5 is a conceptual diagram hierarchically illustrating a detail of a data structure in each play list set shown in FIG. 3
FIG. 6 is a conceptual diagram schematically illustrating a detail of a data structure in each play list set shown in FIG. 3.
FIG. 7 is a conceptual diagram schematically illustrating a detail of a data structure of each item shown in FIG. 6.
FIG. 8 is a conceptual diagram schematically illustrating a logic structure of data in each title element shown in FIG. 4.
FIG. 9 is a conceptual view schematically illustrating a logic structure of data in each title element shown in FIG. 4, in a case that each play list set is composed of one play list.
FIG. 10 is a conceptual view schematically illustrating a detail of a data structure in each object shown in FIG. 3.
FIG. 11 is a view schematically illustrating a situation that an elementary stream for a program #1, shown in the upper column, and an elementary stream for a program #2, shown in the middle column, are multiplexed to form a transport stream for these two programs, on the basis of a time scale in a horizontal direction.
FIG. 12 is a conceptual view conceptually illustrating an image of TS packets multiplexed in one transport stream in the embodiment, as a packet arrangement based on the time scale.
FIG. 13 is a view schematically illustrating a logic structure of data on an optical disc in the embodiment, focusing on development from a logic hierarchy to an object hierarchy or an entity hierarchy.
FIG. 14 is a block diagram schematically illustrating an information record reproduction apparatus in the embodiment.
FIG. 15 is a flow chart indicating a recording operation (part 1) of the information record reproduction apparatus in the embodiment.
FIG. 16 is a flow chart indicating a recording operation (part 2) of the information record reproduction apparatus in the embodiment.
FIG. 17 is a flow chart indicating a recording operation (part 3) of the information record reproduction apparatus in the embodiment.
FIG. 18 is a flow chart indicating a recording operation (part
4) of the information record reproduction apparatus in the embodiment.
FIG. 19 is a flow chart indicating a reproduction operation of the information record reproduction apparatus in the embodiment.
FIG. 20 is a conceptual diagram indicating a data structure of a GOP employed in the embodiment.
FIG. 21 is a conceptual diagram schematically illustrating a seamless angle reproduction with the aid of an interleave, in a comparative example.
FIG. 22 is a conceptual diagram schematically illustrating a seamless angle reproduction with the aid of switch unit, in the embodiment.
FIG. 23 is a conceptual diagram indicating a specific example of a data structure of a switch unit in the embodiment.
FIG. 24 is a conceptual diagram indicating a data structure in an item definition table allowing an angle reproduction, in the specific example of FIG. 23.
FIG. 25 is a conceptual diagram indicating a data structure of an object information file including an AU table, an ES map table and a switch unit address table, for allowing an angle reproduction, in the specific example of FIG. 23.
FIG. 26 is a conceptual diagram indicating a fundamental data structure of address information in a switch unit.
FIG. 27 is a conceptual diagram indicating a specific example of a data structure of the address information of the switch unit, in the specific example of FIG. 23.
FIG. 28 is a flow chart indicating an object reproduction process including an angle switching in the embodiment.
FIG. 29 is a view conceptually illustrating a general flow of an access during a reproduction in the embodiment, showing in association with a logic structure of an optical disc.
FIG. 30 is a conceptual diagram schematically illustrating a hierarchical structure in a specific example of a title information set in the embodiment.
FIG. 31 is a conceptual diagram schematically illustrating a hierarchical structure in a specific example of a disc header in the embodiment.
FIG. 32 is a conceptual diagram schematically illustrating a hierarchical structure in a specific example of title information in the embodiment.
FIG. 33 is a conceptual diagram schematically illustrating a hierarchical structure in a specific example of a play list set in the embodiment.
FIG. 34 is a conceptual diagram schematically illustrating a hierarchical structure in a specific example of a play list in the embodiment.
FIG. 35 is a conceptual diagram schematically illustrating a hierarchical structure in a specific example of a play list element in the embodiment.
FIG. 36 is a conceptual diagram schematically illustrating a hierarchical structure in a specific example of an item definition table in the embodiment.

### Best Mode for Carrying Out the Invention

### (Information Record Medium)

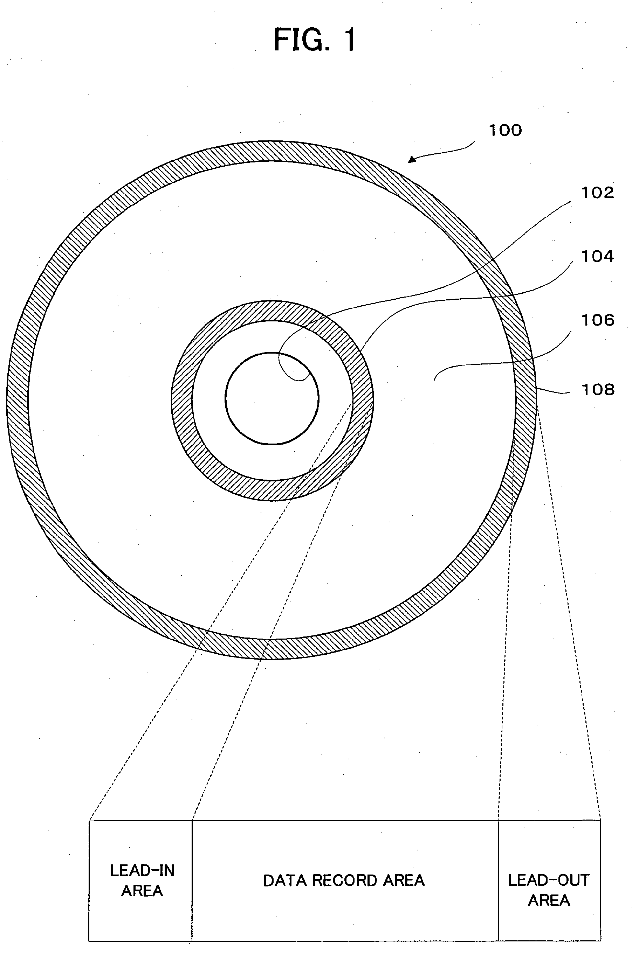

The information record medium of the present invention is discussed, with reference to its embodiments, as well as FIG. 1 to FIG. 13. In these embodiments, the information record medium of the present invention is applied to an optical disc capable of recording (writing) and reproducing (reading).

Firstly, with reference to FIG. 1, a fundamental structure of the optical disc in an embodiment is discussed. FIG. 1 illustrates, in its upper part, a general plan view of the optical disc structure having a plurality of areas, and illustrates conceptually, in its lower part, an area structure in the radius direction corresponding to the upper part.

As shown in FIG. 1, the optical disc 100 may be recorded by various record methods, such as a magneto-optical method, a phase change method, capable of recording (writing) only once or a plurality of times. Similarly to DVDs, the optical disc 100 has a lead-in area 104, a data area 106 and a lead-out area 108, from the inner circumference around a center hole 102 to the outer circumference, on the record surface of the disc body measuring about 12 cm in diameter. In each area, groove tracks and land tracks may be alternately arranged, concentrically or spirally around the center hole 102. The groove tracks may be wobbled. Furthermore, pre-pits may be formed on one or both of these tracks. Incidentally, the present invention is not exclusively limited to the optical-disc having three areas mentioned above.

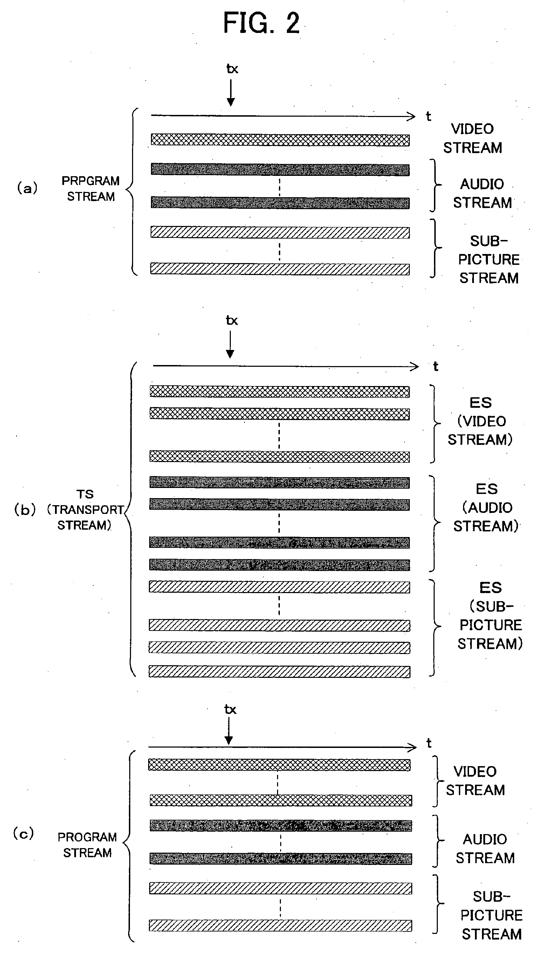

Next, with reference to FIG. 2, the structures of the transport stream (TS) and the program stream (PS) to be recorded onto the optical disc in the embodiment are discussed. FIG. 2 (a) schematically illustrates a MPEG2 program stream of a conventional DVD for a comparison, FIG. 2 (b) schematically illustrates a MPEG2 transport stream (TS) structure. Furthermore, FIG. 2(c) schematically illustrates a MPEG2 program stream structure in the present invention.

In FIG. 2(a), one program stream to be recorded in the conventional DVD includes only one video stream for video data as main picture information, along the time axis t, and further includes up to 8 audio streams of audio data as audio information, up to 32 sub-picture streams for sub-picture data as sub-picture information. That is, the video data to be multiplexed at an arbitrary time point tx relates to only one video stream. For example, a plurality of video stream corresponding to a plurality of TV programs or a plurality of movies can not be included at the same time in the program stream. It is not possible to multiplex a plurality of TV programs and transfer or record them, in a program stream format of a DVD having only one video stream, because at least one video stream is required for each TV program, in order to transfer or record the multiplexed TV program or the like involving a video image.

In FIG. 2(b), one transport stream (TS) to be recorded in the optical disc 100 of the present invention includes a plurality of video streams as elementary streams (ES) for video data as main picture information, and further includes a plurality of audio streams as elementary streams (ES) for audio data as audio information and a plurality of sub-picture streams as elementary streams (ES) for sub-picture as sub-picture information. That is, the video data to be multiplexed at an arbitrary time point tx relates to a plurality of video streams. For example, a plurality of video streams that may correspond to a plurality of TV programs or a plurality of movies can be included at the same time in the transport stream. Thus, it is possible to multiplex a plurality of TV programs and transfer or record them, in the transport stream format having a plurality of video streams. However, the sub-picture stream is not transferred in a digital broadcasting employing the existing transport stream.

In FIG. 2(c), one program stream (PS) to be recorded onto the optical disc 100 of the present invention includes a plurality of video streams for video data as main picture information, and further includes a plurality of audio streams for audio data as audio information and a plurality of sub-picture streams for sub-picture data as sub-picture information. That is, the video data to be multiplexed at an arbitrary time point tx relates to a plurality of video streams. For example, a plurality of video streams that may correspond to a plurality of TV programs or a plurality of movies can be included at the same time in the program stream.

Incidentally, for convenience of explanation, the video stream, the audio stream and the sub-picture stream are arranged in this order from the top in FIG. 2(a) to FIG. 2(c). Nevertheless, this order or sequence does not correspond to an order or sequence for multiplexing packet by packet as mentioned below. In the transport stream, conceptually, a set of one video stream, two audio streams and two sub-picture streams corresponds to one program for example.

The optical disc 100 in the aforementioned embodiment is adapted to multi-record the transport stream (TS) as shown in FIG. 2(b), i.e. to record a plurality of programs at the same time. Furthermore, instead of or in addition to this transport stream, the program stream (PS) as shown in FIG. 2(c) can be multi-recorded onto the same optical disc 100.

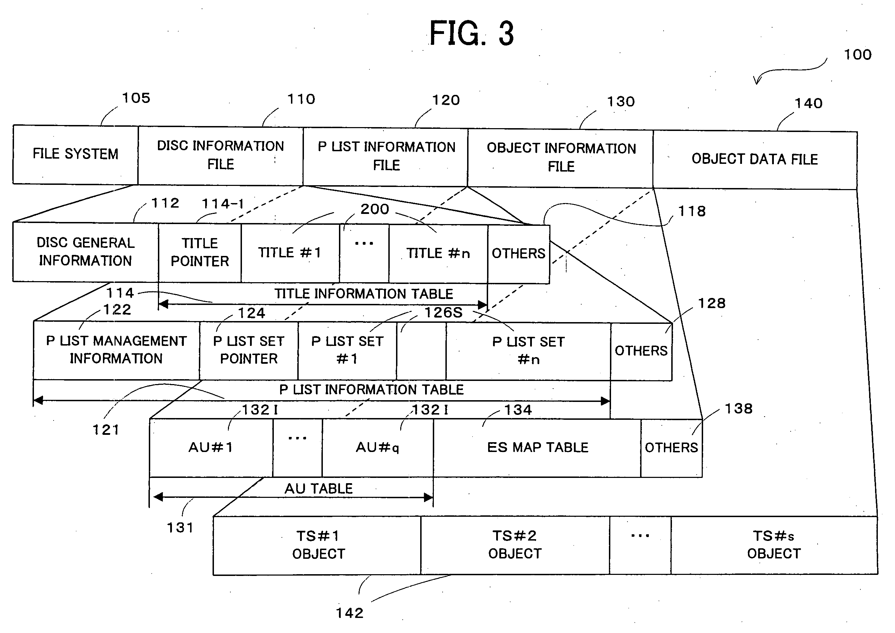

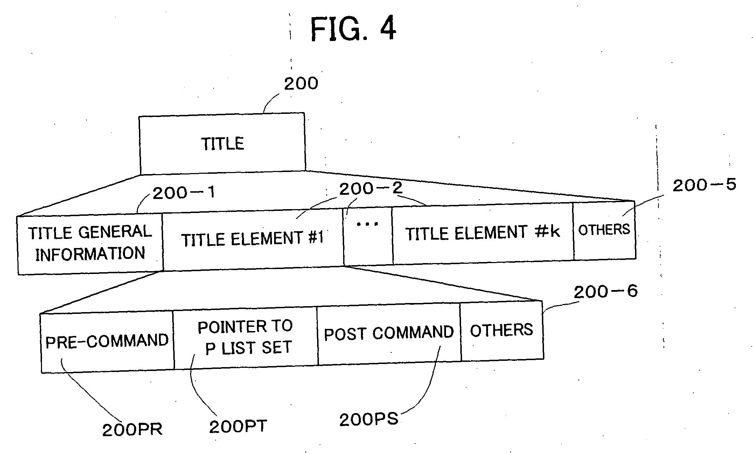

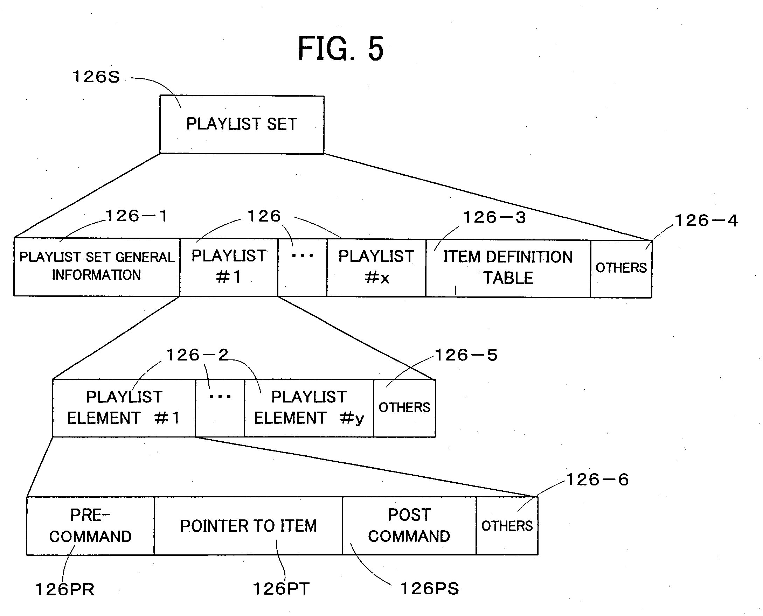

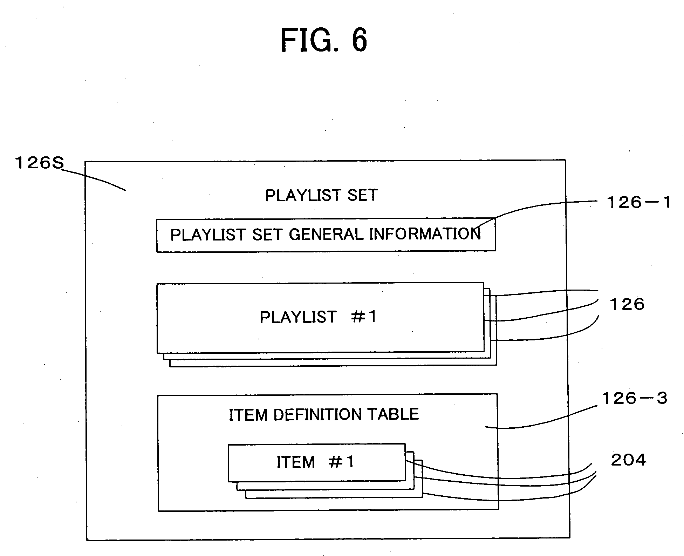

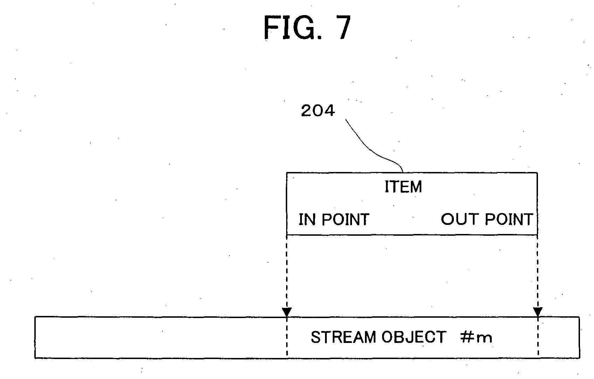

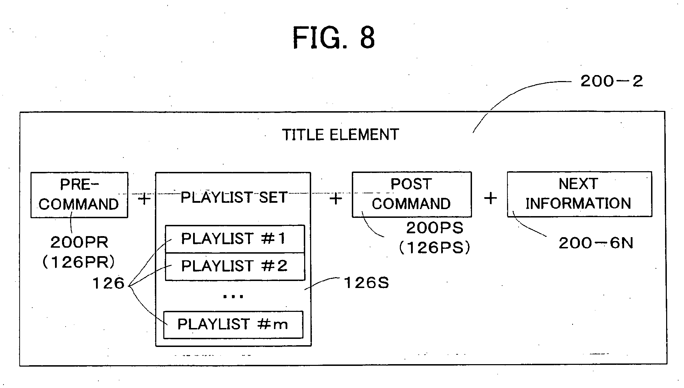

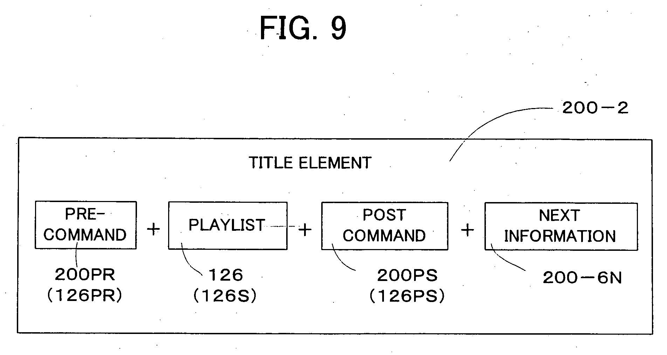

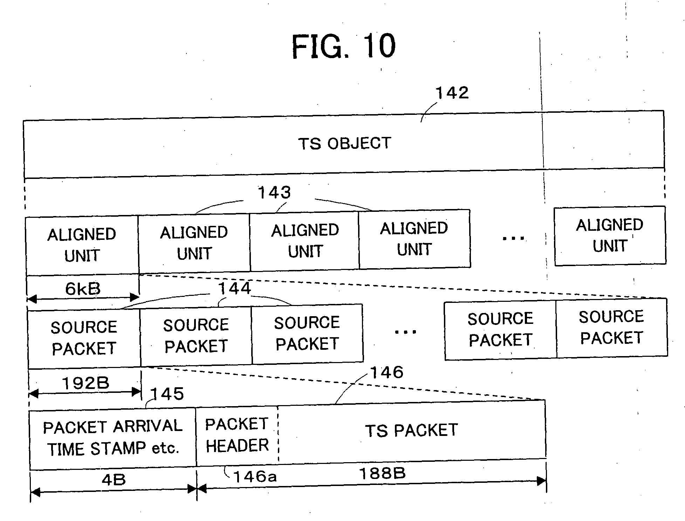

Next, with reference to FIG. 3 and FIG. 10, a structure of data to be recorded onto the optical disc 100 is discussed. FIG. 3 schematically illustrates the data structure to be recorded onto the optical disc 100. FIG. 4 schematically illustrates in detail the data structure in each object shown in FIG. 3. FIG. 5 and FIG. 6 schematically show a data structure in detail respectively in each play list (P list) set shown in FIG. 3. FIG. 7 schematically shows a detail of the data structure of each item shown in FIG. 6. FIG. 8 scherizatically shows a logic structure of data in each title element shown in FIG. 4. FIG. 9 schematically shows a logic structure of data in each title element, in a case that each play list set is composed of one play list. FIG. 10 schematically shows a detail of a data structure in each object shown in FIG. 3.

In the following explanation, the "title" means a reproduction unit, on the basis of which a plurality of "play lists" are executed continuously or sequentially, and which is a logically large grouped unit, such as one movie or one TV program. The "play list set" means a bundle of "play lists". For example, it may be a bundle of play lists to reproduce a plurality of content information having a special relationship switchable to each other in an angle reproduction or a parental reproduction, or may be a bundle of play lists to reproduce content information relating to a plurality of programs broadcasted in the same time zone and collectively recorded. Alternatively, it may be a bundle of play lists to reproduce various content information, in one title, prepared on the basis of required function, for example on the basis of video performance or audio performance required for the information reproduction system, such as a high vision compatibility, a display resolution, a surround speaker compatibility, a speaker layout and so on. The "play list" is information for storing the information required to reproduce the "object" and consists of a plurality of "items" each storing the information about a reproduction range of the object to access the object. The "object" is the entity information of contents constructing the aforementioned MPEG2 transport stream.

In FIG. 3, the optical disc 100 is provided with four files as a logical structure: a disc information file 110; a play list (P list) information file 120; an object information file 130; and an object data file 140. The disc 100 is further provided with a file system 105 for managing these files. Incidentally, although FIG. 3 does not show directly the physical data arrangement on the optical disc 100, it is possible to perform the recording in such a manner that the arrangement shown in FIG. 3 corresponds to another arrangement shown in FIG. 1. That is, it is possible to record the file system 105 or the like in the data record area 106 following the lead-in area 104 and further record the object data file 140 or the like in the data record area 106. The file structure shown in FIG. 3 can be constructed, even without the lead-in area 104 or the lead-out area 108 shown in FIG. 1.

The disc information file 110 is a file for storing general information about the entire optical disc 100, and stores the disc general information 112, the title information table 114 and other information 118. The disc general information 112 may store the total numbers of titles or the like in the optical disc 100. The title information table 114 includes a title pointer 114-1 and a plurality of titles 200 (title #1 -#m) whose ID (identification) number or record address is indicated by the title pointer. In each title 200, each title type (e.g. sequential reproduction type, branch type and so on), or the play list (P list) number constructing each title is recorded for each title, as the logical information.

More specifically, for example, as shown in FIG. 4, each title 200 is made of a title general information 200-1, a plurality of title elements 200-2 and other information 200-5. Furthermore, each title element 200-2 is made of a pre-command 200PR, a pointer 200PT to a play list set, a post command 200PS and other information 200-6.

The pointer 200PT as an example of the first pointer information according to the present invention indicates an ID number of the play list set 1265 stored in the play list information file 120 corresponding to content information to be reproduced on the basis of the title element 200-2 including the pointer 200PT. Incidentally, the pointer 200PT may be information to indicate a record position of the play list set 126S corresponding to the content information to be reproduced on the basis of the title element 200-2. The pre-command 200PR as an example of the first pre-command according to the present invention indicates a command to be executed before reproducing the content information whose reproduction sequence is defined by one play list set 126S designated by the pointer 200PT. The post command 200PS as an example of the first post command according to the present invention is a command to be executed after reproducing the content information whose reproduction sequence is defined by said one play list set. Other information 200-5 included in the title element 200-2 may include next information to designate a title element for a next reproduction after the present reproduction of the present title element, for example.

Therefore, when the information reproduction apparatus reproduces the information record medium, the desired content information can be reproduced as a title element 200-2, by making access to the play list set 126S in accordance with the pointer 200PT and performing a control to select play list corresponding to the desired program or the like from among a plurality of play lists 126 in the play list set 126S. Furthermore, reproducing such a title element 200-2 solely or sequentially makes it possible to reproduce one title 200. Furthermore, it is possible to execute commands to be executed before reproduction, in the content information whose reproduction sequence is defined by one play list set 126S designated by the pointer 200PT, according to the pre-command 200PR. Furthermore, it is possible to execute commands to be executed after the reproduction, in the content information whose reproduction sequence is defined by one play list set 126S designated by the pointer 200PT, according to the post command 200PS. The post command 200PS may be a command to branch the content information, a command to select a next title and so on. Additionally, it is possible to reproduce a next title element 200-2 to be reproduced after the presently reproduced title element 200-2, according to the "next information" included in other information 200-5.

Again in FIG. 3, the play list information file 120 stores the play list (P list) information table 121 indicating the logical structure of each play list. This table 121 is divided into the play list (P list) management information 122, the play list (P list) set pointer 124, a plurality of play list (P list) sets 126S (P list set #1-#n), and other information 128. In this play list information table 121, the logical information of each play list set 126S is stored in the order of the play list set number. In other words, the order for storing the each play list set 126S is the play list set numbers. Furthermore, in the aforementioned title information table 114, the same play list set 126S can be referred from a plurality of titles 200. That is, the play list set #p in the play list information table 121 may be pointed on the title information table 114, even in the case that title #q and title #r use the same play list set #p.

As shown in FIG. 5, the play list set 126S includes play list set general information 126-1, a plurality of play lists 126 (play list #1-#x), an item definition table 126-3, and other information 126-4. Each play list 126 includes a plurality of play list elements 126-2 (play list element #1-#y), and other information 126-5. Furthermore, each play list element 126-2 includes a pre-command 126PR, a pointer 126PT to item, a post command 126PS and other information 126-6.

The pointer 126PT as an example of the second pointer information according to the present invention indicates an item identification number defined by the item definition table 126-3 corresponding to the content information to be reproduced on the basis of the play list element 126-2 including the pointer 126PT.

Incidentally, the pointer 126PT may be an item record position defined by the item definition table 126-3.

As shown in FIG. 6, in the play list set 126S, a plurality of items 204 are defined in the item definition table 126-3. They are commonly belonged to a plurality of play lists 126. Furthermore, as the play list set general information 126-1, a name of each play list 126 included in the play list set 126S, UI (user interface information) such as a reproduction time, address information to each item definition table 126-3 and so on are recorded.

Again in FIG. 5, the pre-command 126PR as an example of the second pre-command according to the present invention indicates a command to be executed before reproduction of one item 204 designated by the pointer 126PT. The post command 126PS as an example of the second post command according to the present invention indicates a command to be executed after the reproduction of said one item 204. Other information 126-6 included in the play list element 126-2 may include the next information to designate the play list element 126-2 relating to the next reproduction of the reproduction of the play list element 126-2.

As shown in FIG. 7, the item 204 is a minimum unit to be displayed. In the item 204, "in-point information" to indicate a start address of an object and "out-point information" to indicate an end address of the object are recorded. Incidentally, each of these "in-point information" and "out-point information" may indicate the address directly or indirectly as a time period or time point on the reproduction time scale. In the figure, if a plurality of ESs (Elementary Streams) are multiplexed for the object designated by "stream object #m", designating the item 204 means designating a special ES or special combination of ESs.

As shown in FIG. 8, the title element 200-2 logically consists of the pre-command 200PR or 126PR, the play list set 126S selected by the pointer 200PT, the post command 200PT or 126PS, and the next information 200-6N. Therefore, a processing to select the play list 126 from among the play list set 126S is executed, according to any condition reproducible in a system, such as video resolution.

As shown in FIG. 9, however, if the play list set designated by the pointer 200PT consists of only one play list, i.e. if the play list set 126S shown in FIG. 3 is replaced by a single play list 126, the title element 200-2 logically consists of the pre-command 200PR or 126PR, the play list 126 to be reproduced during the reproduction operation, the post command 200PS or 126PS, and the next information 200-6N. In this case, once the play list set is designated for the reproduction, the single play list 126 is reproduced, regardless of the condition reproducible in the system.

Again in fig 3, in the object information file 130, the storage position (i.e. the logical address of the reproduction object) in the object data file 140 for each item constructed in each play list 126, and/or various attribute information relating to the reproduction of the item are stored. Particularly in this embodiment, the object information file 130 stores the AU table 131 including a plurality of AU (Associate Unit) information 132I (AU #1-#q) as mentioned below, the ES (Elementary Stream) map table 134 and other information 135.

The object data file 140 stores a plurality of TS objects 142 for each transport stream (TS #1 object-TS #s object), i.e. entity data of contents to be actually reproduced.

Incidentally, four kinds of file discussed with reference to FIG. 3 can be further divided into a plurality of files respectively to be stored. All these files may be managed by the file system 105. For example, the object data file 140 can be divided into a plurality of files such as object data file #1, object data file #2 and so on.

As shown in FIG. 10, the TS object 142 shown in FIG. 3, as a logically reproducible unit, may be divided into a plurality of aligned units 143 each having 6kB of data amount. The head of the aligned units 143 is aligned with the head of the TS object 142. Each aligned unit 143 is further divided into a plurality of source packets 144 each having 192B of data amount. The source packet 144 is a physically reproducible unit, on the basis of which (i.e. packet by packet) at least the video data, the audio data and the sub-picture data from among the data on the optical disc 100 are multiplexed, and other information may be multiplexed in the same manner. Each source packet 144 includes the control information 145 having 4B of data amount to control the reproduction, such as the packet arrival time stamp or the like indicating the reproduction start time point of the TS (Transport Stream) packet on the reproduction time scale, and includes the TS packet 146 having 188B of data amount. The TS packet 146 (also referred to as "TS packet payload") has a packet header 146a at its head portion. The video data may be packetized as the "video packet", the audio data may be packetized as the "audio packet", or the sub-picture data may be packetized as the "sub-picture packet", otherwise other data may be packetized.

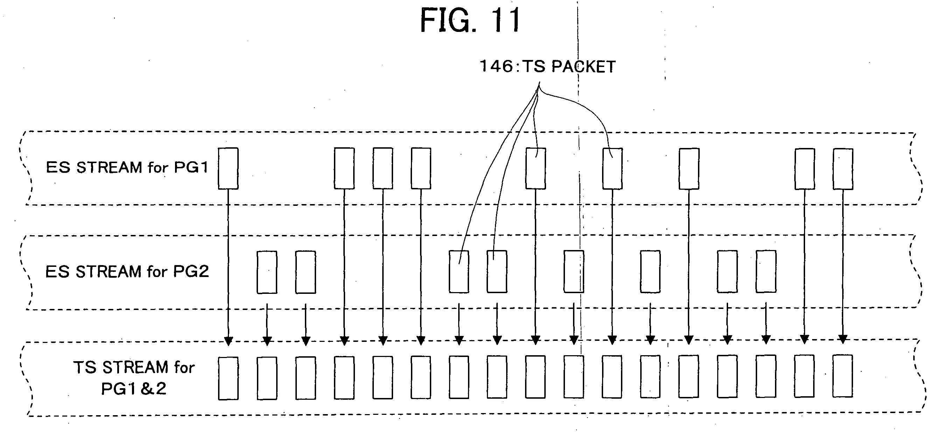

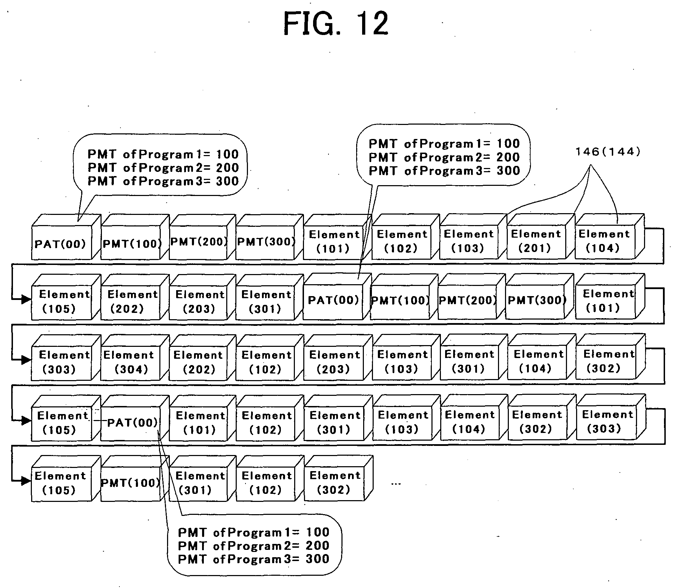

Next, with reference to FIG. 11 and FIG. 12, an explanation is made on the multi-recording of the video data, the audio data, the sub-picture data and the like in the transport stream format as shown in FIG. 2(b), by the TS packet 146 shown in FIG. 4. FIG. 11 conceptually illustrates that the elementary stream (ES) for program #1 (PG1) in the upper stage and the elementary stream (ES) for program #2 (PG2) in the middle stage are multiplexed, and the transport stream (TS) for these two programs (PG1&2) is formed, under an assumption that a horizontal axis is defined as a time axis. FIG. 12 conceptually illustrates an image of the TS packets multiplexed in one transport stream (TS), as a packet array along the time (sic).

As shown in FIG. 11, the elementary stream for program #1 (in the upper stage) may be formed by discretely arranging TS packets 146 obtained by packetizing the video data for program #1, along the time axis. The elementary stream for program #2 (in the middle stage) may be formed by discretely arranging TS packets obtained by packetizing the video data for program #2, along the time axis. Then, these TS packets 146 are multiplexed so that the transport stream (in the lower stage) for two programs is made. Incidentally, omitted for convenience of explanation in FIG. 11, the elementary stream made of TS packets obtained by packetizing the audio data as the elementary stream for program #1, and/or the sub-picture stream made of TS packets obtained by packetizing the sub-picture data may be multiplexed similarly, as shown in FIG. 2(b). In addition to this, the elementary stream made of TS packets obtained by packetizing the audio data, as the elementary stream for program #2, and the sub-picture stream made of TS packets obtained by packetizing the sub-picture data may be multiplexed similarly.

As shown in FIG. 12, in this embodiment, a plurality of TS packets 146 multiplexed as such forms one TS stream. Then, a plurality of TS packets 146 in the multiplexed form is multi-recorded onto the optical disc 100, with the information such as the packet arrival time stamp 145 and the like being added. Incidentally, in FIG. 12, the TS packet 146 consisting of the data forming program #i (i=1, 2, 3) is indicated by "element (10j)", wherein, j (j=1, 2, ...) is a sequential number for each stream composing the program. This (10j) is defined as a packet ID which is an identification number of the TS packet 146 for each elementary stream. This packet ID is fixed at an inherent value for a plurality of TS packets 146 to be multiplexed at the same time point, so that the plurality of TS packets 146 are distinguished from each other even if multiplexed at the same time point.

Furthermore, in FIG. 12, the PAT (Program Association Table) and the PMT (Program Map Table) are also packetized by the TS packet 146 unit and multiplexed. The PAT among them stores a table indicating a plurality of PMT packet IDs. Particularly, the PAT is defined by MPEG2 standard so that (000) is given as a predetermined packet ID, as shown in FIG. 12. That is, from among a plurality of packets multiplexed at the same time point, the TS packet 146 obtained by packetizing the PAT is detected, as the TS packet 146 whose packet ID is (000). The PMT stores a table indicating the packet ID for each elementary stream forming each program in one or more programs. Any packet ID can be given to the PMT, their packet IDs are indicated by the PAT detectable with the packet ID (000) as mentioned above. Therefore, among a plurality of packets multiplexed at the same time point, the TS packets 146 obtained by packetizing the PMT (i.e. TS packets 146 to which packet IDs (100), (200) and (300) are given in FIG. 12) are detected on the basis of the PAT.

In the case that the transport stream as shown in FIG. 12 is transferred digitally, the tuner refers to the PAT and the PMT constructed as such and thereby extracts the multiplexed packets corresponding to the desired elementary stream and decodes the extracted packets.

In this embodiment, these PAT and PMT are included as the TS packets 146 to be stored in the TS object 142 shown in FIG. 10. That is, when the transport stream as shown in FIG. 12 is transferred, the transferred stream can be directly recorded onto the optical disc 100, which is a great advantage.

Furthermore in this embodiment, these PAT and PMT recorded as such are not referred to when the optical disc 100 is reproduced. Instead, referring to the AU table 131 and the ES map table 134, shown in FIG. 3 and mentioned in detail later, makes it possible to perform the reproduction effectively and apply to the complicated multi-vision reproduction or the like. For this, in this embodiment, a relationship between packets and the elementary stream obtained by referring to the PAT and the PMT on decoding or recording for example is stored in the object information file 130, in a form of AU table 131 and ES map table 134, without packetizing or multiplexing.

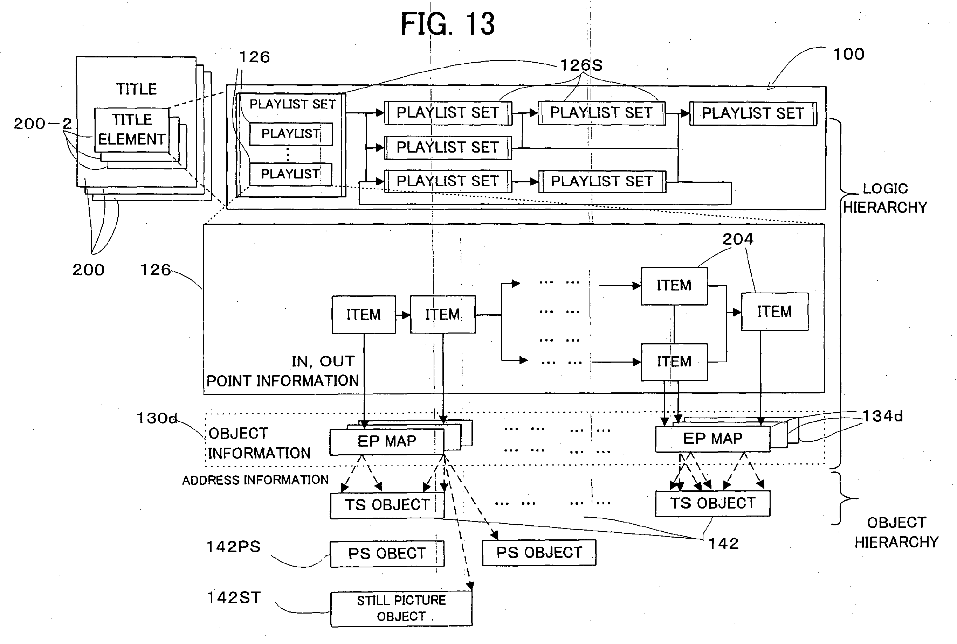

Next, with reference to FIG. 13, the logical structure of data on the optical disc 100 is discussed. FIG. 13 schematically illustrates the logical structure of data on the optical disc 100, focusing on the development from the logic hierarchy to the object hierarchy or the entity hierarchy.

In FIG. 13, one or more titles 200 that are a logical large unit such as one movie or one TV program are recorded on the optical disc 100. Each title 200 includes one or more title elements 200-2. Each title element 200-2 logically consists of a plurality of play list sets 126S. In each title element 200-2, the plurality of play list sets 126S may have a sequential structure or may have a branch structure.

Incidentally, in the case of a simple logical structure, one title element 200-2 consists of one play list set 126S. Furthermore, one play list set 126S consists of one play list 126. On the other hand, it is possible to refer to one play list set 126S by a plurality of title elements 200-2 or a plurality of titles 200.

Each play list 126 is logically made of a plurality of items (play items) 204. In each play list 126, a plurality of items 204 may have the sequential structure or may have the branch structure. On the other hand, it is possible to refer to one item 204 by a plurality of play lists 126. The aforementioned in-point information and out-point information recorded on/in the item 204 logically designates the reproduction range of the TS object 142. Then, the object information 130d of the logically designated reproduction range is referred to and thereby the reproduction range of the TS object 142 is physically designated, via the file system finally. Here, the object information 130d includes various information to reproduce the TS object 142, such as the attribute information of the TS object 142, the ES address information 134d and the like required for the data search in the TS object 142 (Incidentally, the ES map table 134 shown in FIG. 3 includes a plurality of ES address information 134d).

Then, when the information record and reproduce apparatus reproduces the TS object 142 as mentioned below, a physical address to be reproduced in the TS object 142 is obtained from the item 204 and the object information 130d so that a desired elementary stream is reproduced.

Incidentally, the EP (Entry Pass) map including a plurality of ES address information 134d, shown within the object information of FIG. 13, herein indicates an object information table in which the AU table 131 and the ES map table 134 are listed.

Thus, in this embodiment, the in-point information and out-point information recorded on/in the item 204, as well as the ES address information 134d recorded in the ES map table 134 (see FIG. 3) of the object information 130d make it possible to perform the association from the logic hierarchy to the object hierarchy in the reproduction sequence so that the elementary stream is reproduced.

As discussed above, in this embodiment, units of the TS packet 146 are multiplexed and recorded on the optical disc 100. Thereby, the transport stream including a plurality of elementary streams as shown in FIG. 2(b) can be recorded onto the optical disc 100. In this embodiment, in the case that digital broadcasting is recorded onto the optical disc 100, a plurality of programs can be recorded at the same time, within the restriction of the record rate. Nevertheless, a record method is employed herein, in which a plurality of programs are multiplexed and recorded for one TS object 142. Now, an explanation is made on an embodiment of the information record reproduction apparatus capable of performing such a record processing.

### (Information Record Reproduction Apparatus)

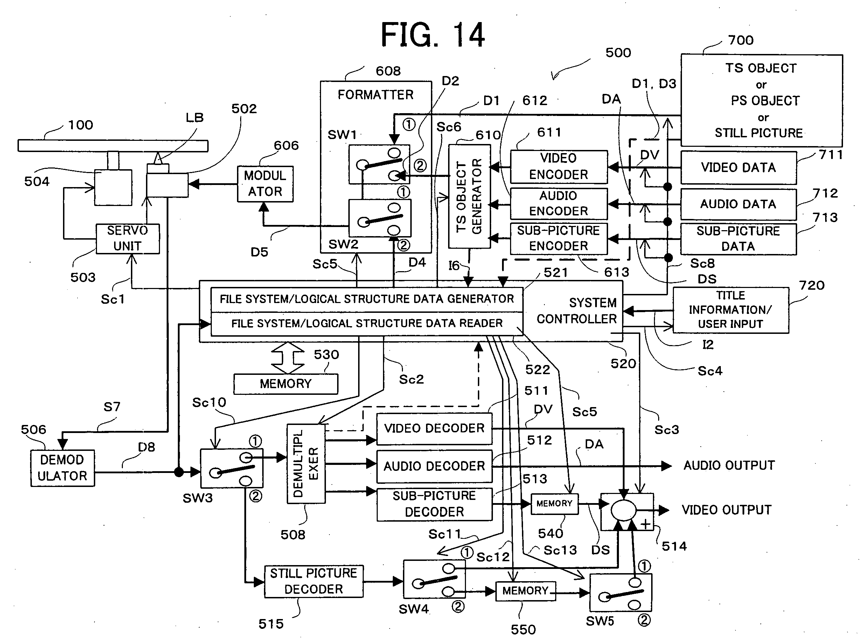

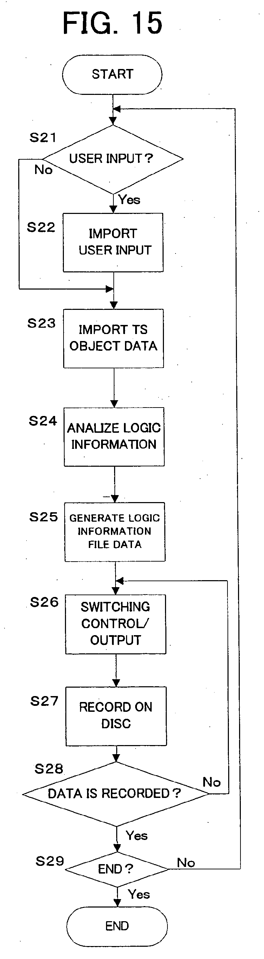

Next, with reference to FIG. 14 to FIG. 19, an embodiment of the information record reproduction apparatus of the present invention is discussed. Here, FIG. 14 is a block diagram of the information record reproduction apparatus, and FIGs. 15 to 19 illustrate the operational flow.

In FIG. 14, the information record reproduction apparatus 500 is roughly divided into a reproduction system and a record system. The apparatus 500 is constructed to record the information onto the optical disc 100 mentioned above and reproduce the information recorded thereon/therein. In this embodiment, the information record reproduction apparatus 500 is thus for recording and reproduction. Nevertheless, an embodiment of the information record apparatus according to the present invention can be constructed basically with the record system of the apparatus 500 and an embodiment of the information reproduction apparatus according to the present invention can be constructed basically with the reproduction system of the apparatus 500.

The information record reproduction apparatus 500 is provided with: an optical pickup 502; a servo unit 503; a spindle motor 504; a decoder 506; a demultiplexer 508; a video decoder 511; an audio decoder 512; a sub-picture decoder 513; an adder 514; a still picture decoder 515; a system controller 520; a memory 530; a memory 540; a memory 550; a modulator 606; a formatter 608; a TS object generator 610; a video encoder 611; an audio encoder 612; and a sub-picture encoder 613. The system controller 520 includes a file system/logical structure data generator 521 and a file system/logical structure data reader 522. Furthermore, the memory 530 and a user interface 720 to give a user input such as title information are connected to the system controller 520.

Among these constitutional elements, the decoder 506, the demultiplexer 508, the video decoder 511, the audio decoder 512, the sub-picture decoder 513, the adder 514, the still picture decoder 514, the memory 540 and the memory 550 mainly constructs the reproduction system. On the other hand, among these constitutional elements, the modulator 606, the formatter 608, the TS object generator 610, the video encoder 611, the audio encoder 612 and the sub-picture encoder 613 mainly constructs the record system. The optical pickup 502, the servo unit 503, the spindle motor 504, the system controller 520, the memory 530 and the user interface 720 to give the user input such as title information are generally shared for both the reproduction system and the record system. Furthermore, for the record system, a TS object data source 700 (or a PS object data source 700, or a still picture data source 700 such as bit map data, JPEG data and the like); a video data source 711; an audio data source 712; and a sub-picture data source 713 are prepared. Furthermore, the file system/logical structure data generator 521 disposed in the system controller 520 is used mainly in the record system, and the file system/logical structure reader 522 is used mainly in the reproduction system.

The optical pickup 502 irradiates the optical disc 100 with a light beam LB such as a laser beam, at the first power as reading light for the reproduction, and at the second power with the light beam LB being modified as writing light for recording. The servo unit 503 performs the focus servo, the tracking servo and the like for the optical pickup 502, as well as the spindle servo for the spindle motor 504, under control of the control signal Sc1 outputted from the system controller 520, during the reproduction and recording. The spindle motor 504 is controlled under the spindle servo by the servo unit 503, for rotating the optical disc 100 at a predetermined speed.

### (i) Structure and Operation of Record System

Next, with reference to FIG. 14 to FIG. 18, a specific structure and the operation of each constitutional element constructing the record system of the information record and reproduction system 500 is explained in each case.

### (i-1) In the case that the already generated object is used

This case is discussed, with reference to FIG. 14 and FIG. 15.

In FIG. 14, the TS object data source 700 may be made of the memory storage such as a video tape, a memory, for storing the TS object data D1.

Firstly in FIG. 15, each title information (e.g. play list contents etc.) to be logically constructed on the optical disc 100 using the TS object data D1 is inputted into the system controller 520, as the user input I2 such as the title information, via the user interface 720. Then, the system controller 520 imports the user input I2 such as the title information via the user interface 720 (step S21: Yes, and step S22). In this case, the user interface 720, under control of the control signal Sc4 from the system controller 520, can perform the input operation in response to the contents to be recorded, such as the selection via the title menu screen. Incidentally, if the user input is already performed (step S21: No), these processings are omitted.

Next, the TS object data source 700 outputs the TS object data D1, under control of the control signal Sc8 to indicate the data reading from the system controller 520. Then, the system controller 520 imports the TS object data D1 from the TS object data source 700 (step S23), and performs the data array analysis (e.g. a record data length and the like) of the TS object data D1, the analysis of each elementary stream structure (e.g. understanding of ES_PID (elementary stream/packet identification number)), on the basis of the PAT, the PMT and the like packetized with the video data as mentioned above, due to the TS analysis feature in the file system/logical structure data generator 521 (step S24).

Next, the system controller 520 makes the file system/logical structure data generator 521 generate the disc information file 110, the play list information file 120, the object information file 130 and the file system 105 (see FIG. 3), as the logical information file data D4, on the basis of the analysis result of each elementary stream and the TS object data D1 data array, as well as the user input I2 such as the imported title information (step S25). The memory 530 is used to generate this logical information file data D4.

Incidentally, variations in which the data about each elementary stream structure information and the TS object data D1 data array may be prepared in advance are naturally understood or suggested, all of which are encompassed within a scope of the embodiment.

In FIG. 14, the formatter 608 is for formatting the data array to store both the TS object data D1 and the logical information file data D4 on the optical disc 100. More specifically, the formatter 608 is provided with a switch Sw1 and a switch Sw2 and is switching-controlled by a switch control signal Sc5 from the system controller 520. When formatting the TS object data D1, it connects the switch Sw1 to a ① side and the switch Sw2 to the ① side so as to output the TS object data D1 from the TS object data source 700. Incidentally, the transmission control of the TS object data D1 is performed by the control signal Sc8 from the system controller 520. On the other hand, when formatting the logical information file data D4, the formatter 608 is switching-controlled by the switch control signal Sc5 from the system controller 520, and connects the switch Sw2 to a ② side so as to output the logical information file data D4.

At step S26 in FIG. 15, (i) the logical information file data D4 from the file system / logical structure data generator 521 at the step S25 or (ii) the TS object data D1 from the TS object data source 700 is outputted through the formatter 608, under the switching-control by the formatter 608 as constructed above (step S26).

The selection output from the formatter 608 is transmitted to the modulator 606 as disc image data D5, and modulated by the modulator 606, and recorded onto the optical disc 100 through the optical pickup 502 (step S27). The system controller 520 also executes the disc record control in this case.

Then, if both the logical information file data D4 generated at the step S25 and the corresponding object data D1 have not been completely recorded yet, the operational flow returns to the step S26 to continue the recording (step S28: No). Incidentally, there is no preference in the record sequence of the logical information file data D4 and the corresponding object data D1.

On the other hand, if the both have been already recorded, it is judged whether or not the recording onto the optical disc 100 is to be ended, on the basis of the presence or absence of an end command (step S29). If it is not to be ended (step S29: No), the operational flow returns to the step S21 to continue the recording. On the other hand, if it is to be ended (step S29: Yes), a series of record processing ends.

As described above, the information record reproduction apparatus 500 performs the record processing in the case of using the already prepared TS object.

Incidentally, the example in FIG. 15 shows that the logical information file data D4 and the corresponding object data D1 are outputted at the step S26, after preparing the logical information file data D4 at the step S25. However, it is also possible to output the object data D1 and/or record the object data D1 onto the optical disc 100 before the step S25, so that the logical information file data D4 is generated and/or recorded after or in parallel with this recording.

Additionally, a PS object data source or a still picture data source- may be -used instead of the TS object data source 700. In this case, the recording processing the same as in the case of the TS object data D1 as mentioned above is performed for the PS object data, or the sill picture data such as bit map data, JPEG data and the like, instead of the TS object data D1. Furthermore, instead of the TS object 142, the PS object data or the still picture data is stored in the object data file 140. Then, various logic information about the PS object data or the still picture data is generated under control of the system controller 520, and stored in the disc information file 110, the play list information file 120, the object information file 130 and the like.

### (i-2) The case of receiving and recording the transport stream on air

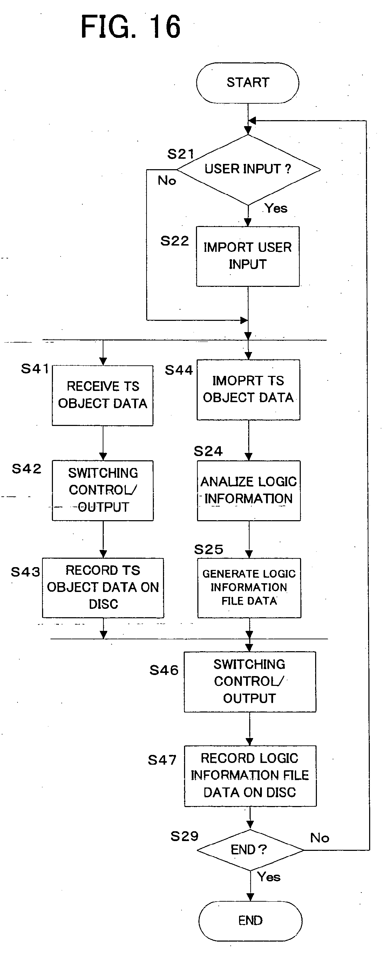

This case is explained with reference to FIG. 14 and FIG. 16. Incidentally, in FIG. 16, the same steps as those in FIG. 15 have the same step reference numbers, and their explanation is omitted as occasion demands.

Again, in this case, the similar processing is performed, as is "the case of using the already prepared object" described above. Therefore, the following explanation is focused on the differences from this case.

In the case of receiving and recording the transport stream on air, the TS object data source 700 is provided with a receiver (set top box) for receiving the digital broadcast on air, for example, receives the TS object data D1, and transmits it to the formatter 608 in real time (step S41). At the same time, reception information D3 (i.e. information corresponding to the data transmitted through the receiver and the interface of the system controller 520) including the program construction information and the belowmentioned ES_PID information, which are deciphered upon receiving, is imported into the system controller 520 and is stored into the memory 530 (step S44).

In the meantime, the TS object data D1 outputted to the formatter 608 is outputted to the modulator 606 under the switching-control by the formatter 608 (step S42), and is recorded onto the optical disc 100 (step S43).

Along with these operations, using the program construction information and the ES_PID information included in the reception information D3 imported upon receiving and stored in the memory 530, the file system / logical structure data generator 521 prepares the logical information file data D4 (step S24 and step S25). Then, after the completion of recording a series of the TS object data D1, this logical information file data D4 is additionally recorded onto the optical disc 100 (step S46 and step S47). Incidentally, these steps S24 and S25 may be performed after the step S43.

Moreover, as the occasion demands (e.g. in the case of editing one portion of the title, or the like), by adding the user input I2 of the title information and the like from the user interface 720 to the program construction information and the ES_PID information stored in the memory 530, it is possible to prepare the logical information file data D4 by the system controller 520 and additionally record this onto the optical disc 100.

As described above, the information record reproduction apparatus 500 performs the record processing in the case of receiving the transport stream on air and recording it in real time.

Incidentally, if all the reception data obtained when broadcasting is once stored into an archive apparatus, and then, if this is used as the object source 700, the same processing as that in "the case of using the already prepared object" will do.

### (i-3) The case of recording the video data,-the audio data and the sub-picture data

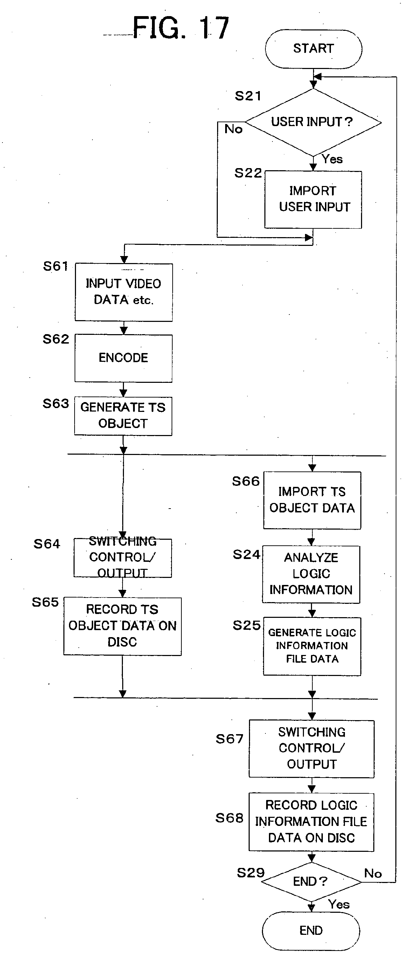

This case is explained with reference to FIG. 14 and FIG. 17. Incidentally, in FIG. 17, the same steps as those in FIG. 15 have the same step reference numbers, and their explanation is omitted as occasion demands.

In the case of recording the video data, the audio data, and the sub-picture data, which are individually prepared in advance, the video data source 711, the audio data source 712, and the sub-picture data source 713 are individually provided with the memory storage, such as a video tape and a memory, and store a video data DV, an audio data DA, and a sub-picture data DS, respectively.

These data sources are controlled by the control signal Sc8 giving an instruction for reading out the data from the system controller 520, and they transmit the video data DV, the audio data DA, and the sub-picture data DS, to the video encoder 611, the audio encoder 612, and the sub-picture encoder 613, respectively (step S61). Then, the video encoder 611, the audio encoder 612, and the sub-picture encoder 613 execute a predetermined type of encode processing (step S62).

The TS object generator 610 is controlled by a control signal Sc6 from the system controller 520 and converts the data encoded in this manner to the TS object data constituting the transport stream (step S63). In this case, the data array information of each TS object data (e.g. a record data length and the like) and the construction information of each elementary stream (e.g. the ES_PID, as described later, and the like) are transmitted as information I6 from the TS object generator 610 to the system controller 520 and are stored into the memory 530 (step S66).

On the other hand, the TS object data generated by the TS object generator 610 is transmitted to the ② side of the switch Sw1 of the formatter 608. Namely, when formatting the TS object data from the TS object generator 610, the formatter 608 is switching-controlled by the switch control signal Sc5 from the system controller 520 to shift the switch Sw1 to the ② side and the switch Sw2 to the ① side, thereby outputting the TS object data (step S64). Then, this TS object data is recorded onto the optical disc 100 through the modulator 606 (step S65).

Along with these operations, using the data array information of each TS object data and the construction information of each elementary stream imported as the information I6 into the memory 530, the file system / logical structure data generator 521 prepares the logical information file data D4 (step S24 and step S25). Then, after the completion of recording a series of the TS object data D2, the logical information file data D4 is additionally recorded onto the optical disc 100 (step S67 and step S68). Incidentally, the step S24 and the step S25 may be processed after the step S65.

Moreover, as the occasion demands (e.g. in the case of editing one portion of the title), by adding the user input I2 such as the title information and the like from the user interface 720 to these information stored in the memory 530, it is possible to prepare the logical information file data D4 by the file system / logical structure generator 521 and additionally record this onto the optical disc 100.

As described above, the information record reproduction apparatus 500 performs the record processing in the case of recording the video data, the audio data, and the sub-picture data, which are individually prepared in advance.

Incidentally, this record processing is applicable even when recording an arbitrary content the user has.

### (i-4) The case of recording the data by authoring

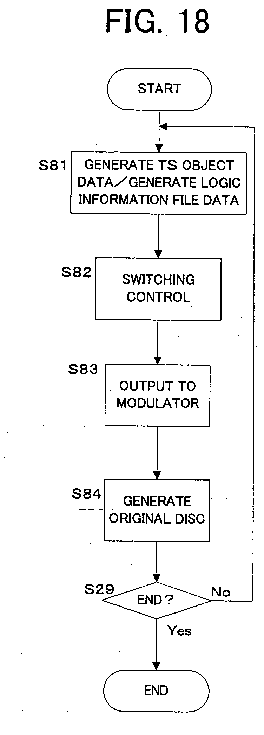

This case is explained with reference to FIG. 14 and FIG. 18. Incidentally, in FIG. 18, the same steps as those in FIG. 15 have the same step reference numbers, and their explanation is omitted as occasion demands.

In this case, by combining the above described three types of record processing in the three cases, an authoring system generates the TS object, the logical information file data, and the like in advance (step S81), and then completes the processing until switching-control performed at the formatter 608 (step S82). Then, the information obtained by this operation is transmitted, as the disc image data D5, to the modulator 606 equipped in front of and/or behind an original disc cutting machine (step S83), and this cutting machine prepares the original disc (step S84).

### (ii) Structure and Operation in Reproduction System

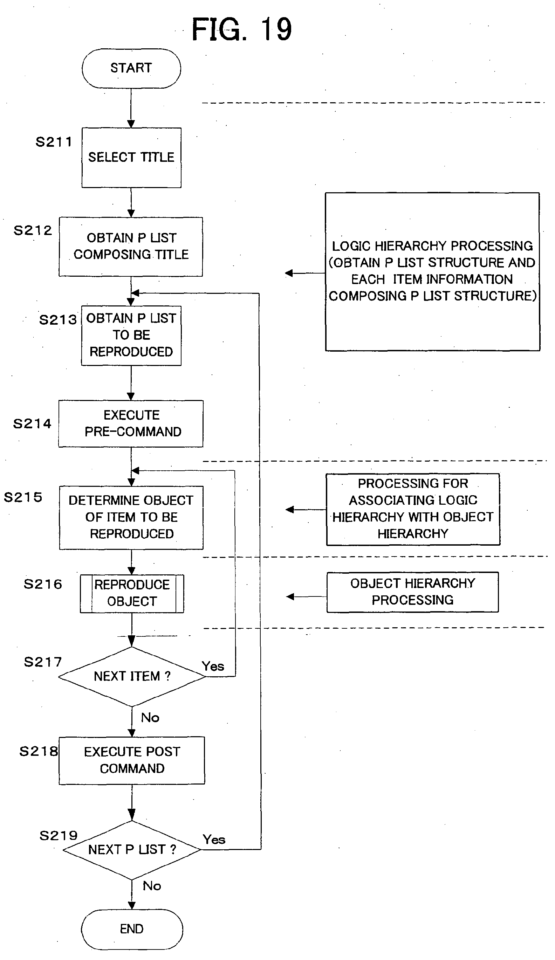

Next, the specific structure and operation of each constitutional element constituting the reproduction system of the information record reproduction apparatus 500 is explained with reference to FIG. 14 and FIG. 19.

In FIG. 14, via the user interface 720, the title to be reproduced from the optical disc 100, its reproduction condition and the like are inputted to the system controller 520, as the user input I2 such as the title information and the like. In this case, under control of the control signal Sc4 from the system controller 520, the input processing suitable for the content to be reproduced, such as a selection on a title menu screen, can be achieved by the user interface 720.

Responding to this, the system controller 520 controls the disc reproduction with respect to the optical disc 100, and the optical pickup 502 transmits a reading signal S7 to the demodulator 506.

The demodulator 506 demodulates a recorded signal recorded onto the optical disc 100 from this reading signal S7, and outputs it as demodulated data D8. The logical information file data (i.e. the file system 105, the disc information file 110, the P list information file 120, and the object information file 130, shown in FIG. 3) included in this demodulated data D8 as being a not-multiplexed information part is supplied to the system controller 520. On the basis of this logical information file data, the system controller 520 executes various reproduction control, such as processing of determining a reproduction address and controlling the optical pickup 502.

On the other hand, depending on whether the TS object data is included as the multiplexed information part in the demodulated data D8, or whether the still picture data is included, or whether both data are included, the shift switch Sw3 is shifted to ① side (demultiplexer 508 side) or shifted to ② side (still decoder 515 side), under control of the control signal Sc10 from the system controller 520. Thereby, the TS object data is selectively supplied to the demultiplexer 508, and the still picture data is selectively supplied to the still picture decoder 515.

Then, as for the TS object data included as the multiplexed information part in the demodulated data D8, the demultiplexer 508 demultiplexes the TS object data, under control of the control signal Sc2 from the system controller 520. Here, when the access to the reproduction position address is terminated under the reproduction control by the system controller 520, the control signal Sc2 is transmitted to start the demultiplexing.

The video packet, the audio packet and the sub-picture packet are transmitted respectively from the demultiplexer 508 and supplied respectively to the video decoder 511, the audio decoder 512 and the sub-picture decoder 513. Then, the video data DV, the audio data DA and the sub-picture data DS are decoded, respectively. In this case, the sub-picture data DS is supplied to the adder 514 via the memory 540. The sub-picture data DS is outputted from the memory 540, selectively or at a predetermined timing, under control of the control signal Sc5 from the system controller 520, so as to be super-imposed on the video data DV, if needed. That is, in comparison with a case that the sub-picture data outputted from the sub-picture decoder 513 is directly super-imposed, it is easy to control the timing of the super-imposing, or to judge the need for the super-imposing. For example, under output control of the control signal Sc5, it is possible to select whether or not a caption using the sub-picture is displayed over the main picture, or whether or not a menu screen using the sub-picture is displayed.

Incidentally, although the packets obtained by packetizing the PAT or the PMT, included in the transport stream shown in FIG. 6, are included as a part of the demodulated data D8, respectively, they are discarded or abandoned at the demultiplexer 508.

The adder 514 is controlled by a control signal Sc3 giving an instruction of the mixing from the system controller 520, and mixes or superimposes in a predetermined timing the video data DV and the sub-picture data DS, which are respectively decoded at the video decoder 511 and the sub-picture decoder 513. The result is outputted as a video output from the information record reproduction apparatus 500 to a TV monitor, for example.

On the other hand, the audio data DA decoded at the audio decoder 512 is outputted as an audio output from the information record reproduction apparatus 500 to an external speaker, for example.

In the case that the still picture data is included in the decoded data D8, the still picture data is supplied to the still picture decoder 515, via the shift switch Sw3 controlled by the control signal Sc10 from the system controller 520, instead of or in addition to such a reproduction operation or processing of the video data DV or the sub-picture data DS. Then, the still picture data such as the decoded bit map data, JPEG data and the like is added to the adder 514 via the shift switch Sw4, without subjected to any processing, under control of the control signal Sc11 from the system controller 520. Alternatively, it may be temporarily stored in the memory 550 via the shift switch Sw4. The still picture data is outputted from the memory 550, selectively or at a predetermined timing, under control of the control signal Sc12 from the system controller 520, and then supplied to the adder 514 via the shift switch Sw5. Thereby, if needed, the video data DV or the sub-picture data DS is super-imposed over the still picture data or vice versa. That is, in comparison with a case that the still picture data outputted from the still picture decoder 515 is directly super-imposed, it is easy to control the timing of the super-imposing, or to judge the need for the super-imposing. For example, under output control of the control signal Sc12, it is possible to select whether or not a still picture such as a menu screen or a window screen using the still picture data or a still picture as a background image using the still picture data is displayed on the main picture of the sub-picture.

Additionally, under control of the control signal Sc13 from the system controller 520, the still picture data may be outputted via another route (not shown), with the aid of the shift switch Sw5 shifted to ② side. Alternatively, no still picture data may be outputted from the shift switch Sw5 shifted to ② side.

Here, the specific example of a reproduction processing routine by the system controller 520 is explained with reference to a flow chart of FIG. 19.

In FIG. 19, it is assumed that as an initial condition, the recognition of the optical disc 100 in the reproduction system and the recognition of a volume structure and a file structure by the file system 105 (see FIG. 3) have been already completed by the system controller 520 and the file system / logical structure data reader 522 inside of the system controller 520. Here, an explanation is made on the operational flow after obtaining the total number of the total titles from the disc general information 112 in the disc information file 110 and then choosing or selecting one title from among them.

Firstly, the choice or selection of the title is performed via the user interface 720 (step S211). Responding to this, the system controller 520 obtains the information about the reproduction sequence from a reading result of the file system / logical structure data reader 522. Incidentally, in the selection of the title 200, the desired title element(s) 200-2 (see FIG. 4) may be selected from among a whole title elements 200-2 composing the title 200, with the aid of an external input operation by the user with using a remote controller and the like, or one title element 200-2 may be selected automatically depending on a system parameter or the like adjusted for the information record reproduction apparatus 500.

Then, contents of a plurality of play lists 126 composing a play list set 126S corresponding to the selected title 200 (title element 200-2) are obtained. Here, as a processing at a logic hierarchy, the information about the each play list 126 structure and each item composing each play list (see FIG. 5, FIG. 6 and FIG. 13) is obtained (step S212).

Then, contents of the play list 126 to be reproduced is obtained from among a plurality of play lists 126 obtained at step S212. For example, herein, the reproduction is started from a play list #1, and the contents of the corresponding play list 126 is obtained (step S213). The contents of the play list 126 may be one or more play list elements 126-2 (see FIG. 5), which are obtained by the obtaining processing at step S213.

Then, the pre-command 126PR (see FIG. 5) included in this play list 126 is executed (step S214). Incidentally, it is possible for the pre-command 126PR to select one from among a plurality of play lists 126, which composes the play list set 126S with a certain relationship of the plurality of play lists 126. If the play list element 126-2 composing the play list 126 does not have the pre-command 126PR, this processing is omitted.

Then, the TS object 142 (see FIG. 3 and FIG. 10) to be reproduced is determined (step S215), on the basis of the item 204 (see FIG. 5 to FIG. 7) identified by the play list 126 obtained at step S213. More specifically, on the basis of the item 204, the object information file 130 (see FIG. 3) relating to the TS object 142 as the reproduction target is obtained and a stream number, address and the like of the TS object 142 to be reproduced are identified.

Incidentally, in this embodiment, also the belowmentioned AU (Association Unit) information 132I and PU (Presentation Unit) information 302I are obtained as the information stored in the object information file 130. On the basis of these informations, the aforementioned logic hierarchy is associated with the object hierarchy (see FIG. 13).

Then, the reproduction of the TS object 142 determined at step S215 is actually started. That is, on the basis of the processing at the logic hierarchy, the processing at the object hierarchy is started (step S216).

During the reproduction of the TS object 142, it is judged whether or not the next item 204 composing the play list 126 to be reproduced exists (step S217). Then, insofar as the next item 204 exists (step S217: Yes), the process goes back to the step S215 to repeat the aforementioned determination and the reproduction of the TS object 142.

On the other hand, at the judgement at step S217, if it is judged that the next item 204 does not exist (step S217: No), the post command 126PS (see FIG. 5) corresponding to the presently executed play list 126 is executed (step S218). Incidentally, if the play list element 126-2 composing the play list 126 does not have the post command 126PS, this processing is omitted.

Then, it is judged whether or not the next play list 126 composing the selected title 200 exists (step S219). If exists (step S219: Yes), the process goes back to the step S213 to repeat the processings following obtaining the play list 126 to be reproduced.

On the other hand, at the judgement at step S219, if it is judged that the next play list 126 does not exist (step S219: No), i.e. if the all play lists 126 to be reproduced corresponding to the title 200 selected at step S211 are completely reproduced, a series of reproduction operations or processings is terminated.

As discussed above, the information record reproduction apparatus 500 in this embodiment reproduces the optical disc 100.

Particularly in this embodiment, in (i) the structure and operation of the record system mentioned above, from the start to the end is recorded logically as one title 200, while a plurality of play list sets 126S including a plurality of play lists 126 are recorded with respect to a plurality of content informations. Furthermore, each TS object in the object data file 120 is recorded by the unit of "switch unit" to perform an angle switching during the reproduction, as mentioned later in detail.

Particularly in this embodiment, in (ii) the structure and operation of the reproduction system, the desired content information can be reproduced as the title, by performing a control to select one or more, from among a plurality of play lists 126 included in each play list set 126S, which corresponds to a desired program or desired angle block. Furthermore, it is possible to perform the angle switching seamlessly at each boundary of the switch unit, in response to an "angle switching instruction", during the reproduction of the TS object 142 at the step S216. Such an angle switching operation or angle reproduction operation is mentioned later in detail.

### (Selection Method of Play List in Play List Set)

In this embodiment, the play list 126 corresponding to the desired content information is appropriately selected from the play list set 126S included in the reproduced play list information file 120.

Such a selection of the play list may be performed on the basis of a selection condition, which is described in a play list selection commands list for each play list 126, provided in the pre-command 200PR (see FIG. 4) included in the title element 200-2. Alternatively, it may be performed on the basis of the attribute information (e.g. information to indicate attribute of the content information relating to the play list, such as video resolution as for visual function, progressive/interleave, video codec, audio channel number, audio codec and so on) added to each play list 126 stored in the play list set 126S. Alternatively, it may be performed on the basis of play list set control information, in which the selection condition is stored for each play list, and which is included in the title element 200-2. From such a selection, the play list corresponding to the desired content information can be selected, such as a desired program, a desired parental block, a desired angle block, and so on. Alternatively, for example, it is possible to select the play list reproducible by the information reproduction system, and preferably allowing the maximum or full utilization of the audio reproduction function or video reproduction function provided for the information reproduction system.

### (Angle Switching Operation)

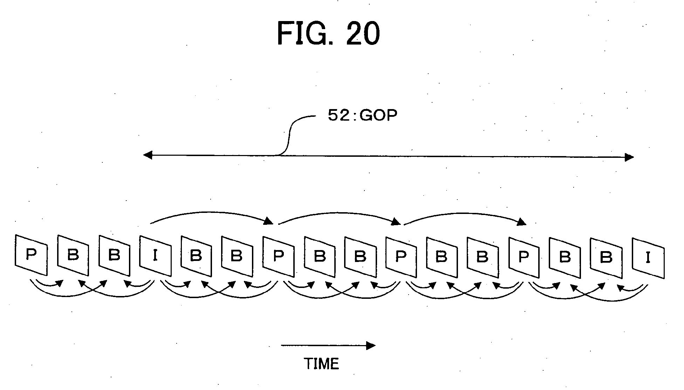

Now, with reference to FIG. 20 to FIG. 29, an explanation is made on an angle switching operation when the information record reproduction apparatus 500 reproduces the optical disc 100 configured as such.

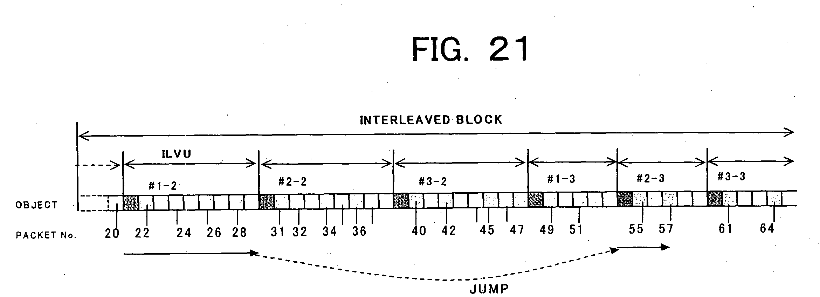

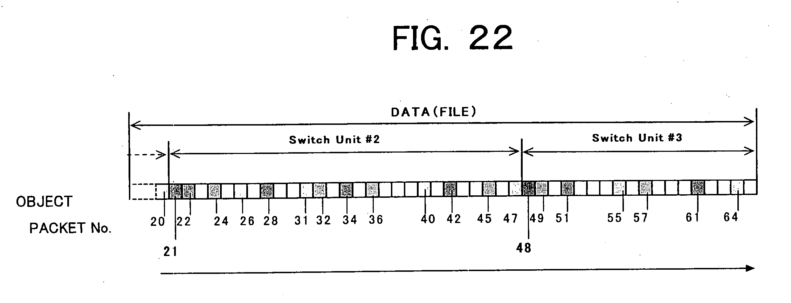

Firstly, an explanation is made on the switch unit that is a basis for the angle switching operation in this embodiment, with reference to FIG. 20 to FIG. 22. Here, FIG. 20 conceptually illustrates a data structure of GOP employed in this embodiment. FIG. 21 is a conceptual view schematically illustrating a seamless angle reproduction operation using an interleave in a comparative example. FIG. 22 is a conceptual view schematically illustrating a seamless angle switching using a switch unit according to this embodiment.

The video data packetized as the TS object 142 (see FIG. 10) in this embodiment consists of one or more GOPs (Group of Pictures). The "GOP" is a minimum image unit reproducible alone and defined according to the MPEG2 format standard that is an image compression format employed to record video data onto the optical disc 100 of this embodiment.

Now, an explanation is made on the outline of the MPEG2 format. Frame images before and after a certain frame image in a series of frame images often have a resemblance and an interrelation to each other. The MPEG2 format notes this point to generate intervening frame images between or among a plurality of frame images transferred discretely so that these intervening frame images are not transferred, through an interpolation based on motion vectors of the original image. In this case, it is sufficient for recording these intervening frame images to record differential information from a plurality of frame images and the motion vector information. For the reproduction, it is possible to reproduce these intervening frame images by predicting them from a plurality of frame images with reference to these differential information and motion vector information. Thereby, a compression recording of images can be achieved.

As shown in FIG. 20, the GOP 52 employed in this embodiment consists of a plurality of frame images aligned on a time scale. FIG. 20 shows a case that one GOP 52 consists of 12 frame images (frame images included in one GOP 52 is not constant in their number, in the MPEG2 format). In FIG. 20, frame images designated by a code "I" are referred to as "I pictures (Intra-coded pictures)". They can be fully reproduced independently (i.e. only with themselves) to present complete frame images. On the other hand, frame images designated by a code "P" are referred to as "P pictures (Predictive-coded pictures)". They are predicted pictures generated by for example, decoding differences from predicted pictures interpolated and reproduced on the basis of other P pictures or already decoded I pictures. Furthermore, frame images designated by a code "B" are referred to as "B pictures (Bidirectionally predictive-coded picture)". They are predicted pictures reproduced with a prediction using not only already decoded I pictures or P pictures but also future I pictures or future P pictures recorded in the optical disc or the like. In FIG. 20, prediction relations (interpolation relations) between pictures are shown by arrows. When they are displayed as images actually, one frame image is formed from each picture shown in FIG. 20. Incidentally, in the MPEG2 format employed for the optical disc 100 in this embodiment, a variable rate format in which data amount included in each GOP 52 is not constant is employed. That is, if each picture included in one GOP 52 corresponds to a fast motion picture and interrelations between each picture is small, the data amount to configure each picture becomes large and therefore the data amount included in one GOP 52 becomes large. On the other hand, each picture included in one GOP 52 corresponds to a slow motion picture and interrelations between each picture is large, the data amount to configure each picture becomes small and therefore the data amount included in one GOP 52 becomes small.

In a seamless angle switching operation using an interleave in the comparative example, as shown in FIG. 21, a physical arrangement of interleaved blocks is employed to maintain or preferably improve a transfer rate of the video stream for each angle. An interleaved unit (ILVU) is assigned to each angle to jump the reading so that the data not to be reproduced is not read.

More specifically, in FIG. 21, the TS packet 146 corresponding to angle #2 or #3 does not exist in ILVU #1-i, but the TS packet 146 corresponding to angle #1 exists. Similarly, the TS packet 146 corresponding to angle #1 or #3 does not exist in ILVU #2-i, but the TS packet 146 corresponding to angle #2 exists. Similarly, the TS packet 146 corresponding to angle #1 or #2 does not exist in ILVU #3-i, but the TS packet corresponding to angle #3 exists. If the angle switching does not performed after the last packet in the ILVU #1-2 (packet #29) corresponding to angle #1 is reproduced, reproduction sequence jumps to the next ILVU #1-3 corresponding to angle #1, so that the reproduction of the head packet (packet #48) is started. On the other hand, if the angle switching is to be performed after the last packet (packet #29) in ILVU #1-2 corresponding to angle #1 is reproduced, the reproduction sequence jumps to the next ILVU #2-3 corresponding to angle #2, so that the reproduction of the head packet (packet #54) is started (i.e. jumps as shown by an arrow in the figure).

In this embodiment, it is noted that the angle switching can be achieved without using the interleave as shown in FIG. 21, if the reading speed at the disc drive in the information record reproduction apparatus 500 is sufficiently high. For example, it is expected that the video transfer rate is improved to about 32Mbps with the aid of blue laser, if the present video average transfer rate is about 6Mbps. Therefore, the transfer rate is sufficient, even without the interleave as shown in FIG. 21, if it is for 5 angles or so. Alternatively, if the transfer rate of one video stream is 10 Mbps, the transfer rate is expected to be sufficient for switching over 2 or 3 angles.

In view of the consideration for the aforementioned comparative example, this embodiment performs the seamless angle switching without using the interleave, and has the following data arrangement in the object data file 140.

That is, firstly, a plurality of video streams in this embodiment include a plurality of video stream made of a plurality of angle video information corresponding to a plurality of viewpoints. Each of a plurality of angle video information are made of an assembly of GOPs (see FIG. 20). Each GOP 52 is divided and stored in the TS packet 146 (see FIG. 10) in the object data file 140. More specifically, one I picture composing the GOP 52 for example is divided and stored into a plurality of TS packets 146. One B picture is also divided and stored into a plurality of TS packets 146. Since one GOP 52 may be made of a few to a few tens of pictures depending on the video contents (see FIG. 20), a whole GOP 52 is divided and stored into many TS packets.

Particularly in this embodiment as shown in FIG. 22, switch units (#1, #2, #3, ....) are defined as logical boundaries for the angle switching on the reproduction time scale, in the object data file 140. In each switch unit, many TS packets 146 including TS packets 146 storing the GOP 52 corresponding to a plurality of video streams relating to a plurality of angles are arranged according to the packet number order.

Particularly herein, a plurality of TS packets 146 for storing the divided GOP 52 are defined not to extend over each boundary between switch units. For example, the TS packets 146 belonging to the same GOP 52 exist in the same switch unit. Furthermore, it is defined so that the GOP 52 reproducible without using any GOP 52 belonging to an anterior switch unit extending over the switch unit boundary is arranged as the first GOP 52 of the corresponding switch unit. For example, the first GOP 52 of the switch unit is started from an I picture. For this, the first GOP 52 of the switch unit can be reproduced without using any of I, P and B pictures belonging to another GOP 52 of the anterior switch unit (see FIG. 20).

Due to such a recording, the information record reproduction apparatus 500 does not shift or switch the video stream to be reproduced immediately in response to an angle switching instruction, for performing the angle switching during the reproduction of the optical disc 100, but shifts or switches the video stream after waiting the reproduction is completed until the boundary of the switch unit. Then, for example in FIG. 22, the switch-unit #3 to be reproduced next to the switch unit #2 whose reproduction is completed can be reproduced without any GOP 52 belonging to the switch unit #2. Furthermore, a plurality of TS packets 146 for storing the divided GOP (divided from the same GOP) 52 do not extend over the boundary between the switch units #2 and #3. Therefore, after the reproduction of the switch unit #2 is completed, the switch unit #3 can be reproduced appropriately and sequentially starting from the TS packet 146 to be firstly reproduced. That is, it is easy to perform the seamless angle switching, by performing the angle switching from the switch unit #2 to the switch unit #3 at the boundary therebetween, while reproducing the angle video information for relatively short period via a buffer for the seamless reproduction.

Incidentally, in order to shorten the response time for the switching in the seamless angle reproduction, the length of the aforementioned switch unit is advantageously shortened. For example, it may be preferably within 1.5 seconds in practice. This length may be fixed, or may be variable.

As a result, in this embodiment, the seamless angle switching can be achieved, even without using the interleave. Since the interleave is not used, there is no need for replicating and recording the same object for every ILVU shown in FIG. 21, especially as for audio data or the like. For this, an efficient data recording can be achieved as a whole. Furthermore, avoiding the reading jump for every ILVU shown in FIG. 21, there is no need for reading an address to be jumped, in the navigation packet which is disposed at the head of each ILVU in the conventional DVD for example. Therefore, the reading operation is facilitated.

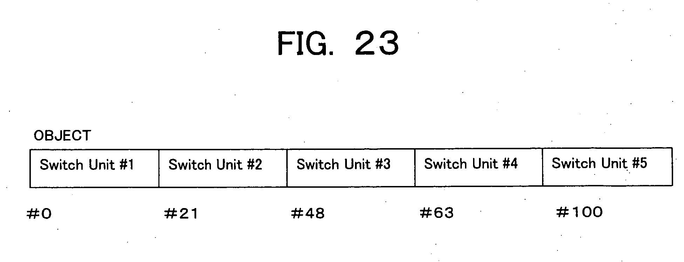

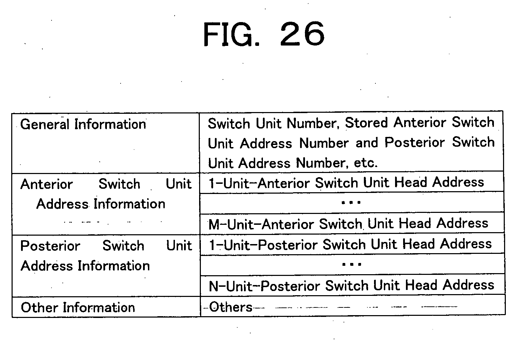

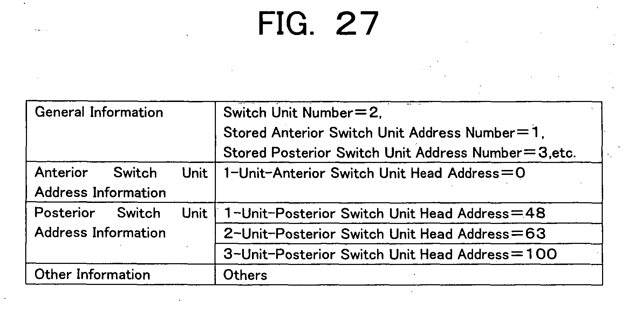

As mentioned later, in this embodiment, the head address (e.g. a head packet number or a PTS thereof) of each switch unit defining the boundary between switch units may be recorded in the upper logical information, such as the object information file 130, the play list information file 120, the disc information file 110 and so on (see FIG. 23 to FIG. 25). Alternatively, it may be recorded in the navigation packet for the reproduction control disposed at the head or the like of each switch unit. For example, in FIG. 22, it may be recorded in TS packets, as the navigation packets, whose packet number is 21 and 48, respectively (see FIG. 26 and FIG. 27).

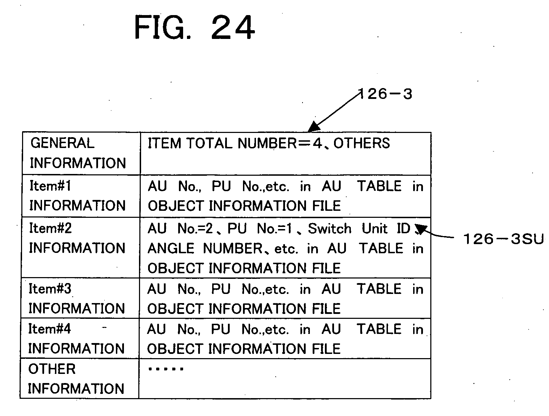

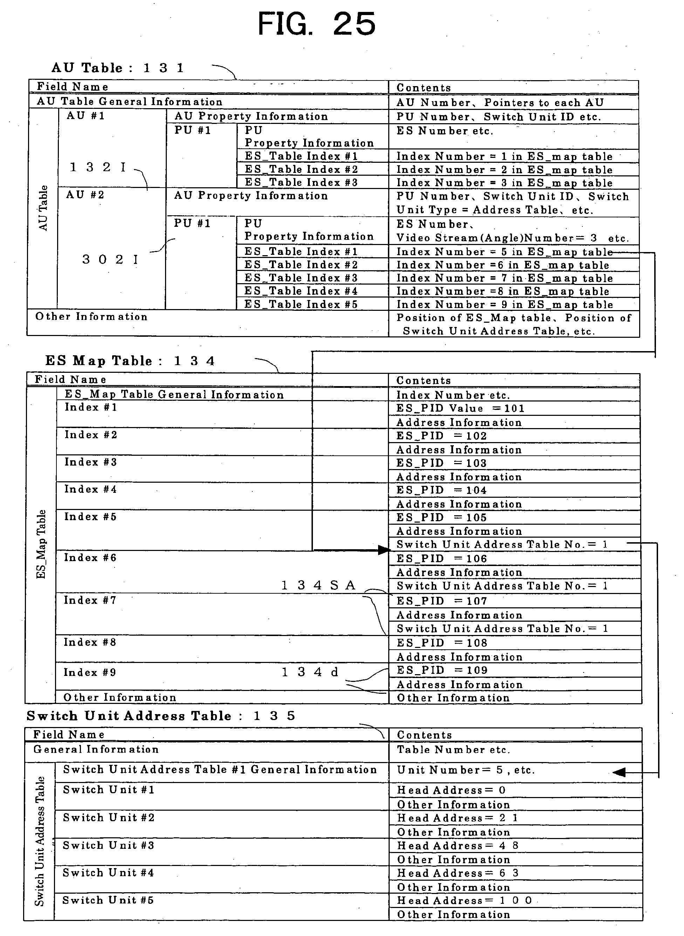

Next, an explanation is made on a specific example of the object information, the reproduction control information and the like used for performing the angle switching process in this embodiment, with reference to FIG. 23 to FIG. 25. Here, FIG. 23 is a conceptual view showing a specific example of a data structure of the switch units according to the present embodiment. FIG. 24 is a conceptual view showing a data structure of an item definition table allowing the angle reproduction in the specific example of FIG. 23. FIG. 25 is a conceptual view showing a data structure of an object information file including an AU table, an ES map table and a switch unit address table allowing the angle reproduction in the specific example of FIG. 23.

As shown in FIG. 23, the TS object 142 having 5 switch units (#1 to #5) is a specific example. The head packet numbers of each switch unit #1 to #5 are #0, #21, #48, #63 and #100, sequentially from the head to end. Furthermore, the TS object 142 is made of five streams in total; three video streams compatible with the angle switching, and two audio streams.

In this specific example, as shown in FIG. 24, an item definition table 126-3 (see FIG. 6) constructed in the play list set 126S includes the general information indicating that "item total number =4" and the like and further includes four item information (#1 to #4). In each item information, an AU number and a PU number in the object information file 130 (discussed later) are described.

Particularly, in the item information #2, the switch unit identification (ID) information 126-3SU and the number of the angles are recorded. The TS object 142 designated by this item information #2 is an object including the switch units. Incidentally, in this specific example, other item information #1, #3 and #4 have no relationship with the video stream compatible with the angle switching.

In this specific example, as shown in FIG. 25, the object information file 130 includes the switch unit address table 135 (see the low column of the figure), in addition to the AU table 131 (see the upper column of the figure) and the ES map table 134 (see the mid column of the figure) shown in FIG. 3. Here, the indexes #5, #6 and #7 in the ES map table 134 indicate three video streams compatible with the angle switching and corresponding to the item #2 of FIG. 24, and the indexes #8 and #9 indicate two audio streams corresponding to them.

In this specific example as shown in the upper column of FIG. 25, the AU table 131 may have a structure allowing an addition of tables in the required number for each filed. For example, if four AUs exist, it may have a structure to increase the corresponding fields to 4. In the AU table 131, the "AU table general information", in which the numbers of AUs, the pointer to each AU and the like are recorded, and the "other information" are stored in other fields.

Furthermore, in the AU table 131, the index number of the corresponding ES map table 134 is described as the AU information 132I indicating the ES table index #m in each PU #m corresponding to each AU #n. Here, the "AU" is a unit which may correspond to a "program" of a television broadcasting as mentioned above (particularly a unit including a plurality of switchable "visions" in the case of a "multi-vision type" broadcasting), in which one or more PUs is included as reproduction units. On the other hand, the "PU" is an -assembly of elementary streams switchable to each other and included in each AU as mentioned above. The PU information 302I identifies the ES table index # corresponding to each PU. For example, in the case that multi-view contents are composed of the AU, a plurality of PUs are stored in the AU, and the pointer to a plurality of elementary stream packet IDs indicating the packets composing each view contents are stored in each PU.

In the mid column of FIG. 25, in the ES map table 134, the ES map table general information, a plurality of indexes #m (M=1, 2, ...) and "other information" are stored for each field.

In the "ES map table general information", the ES map table size, a total index number and the like are described.

Each "index #m" includes the elementary stream packet ID for all elementary stream used for the reproduction, and the corresponding index number and the elementary stream address information.

For example, in this embodiment, if the elementary stream is a video stream of MPEG2 as mentioned above, only the head TS packet number of the I picture and the corresponding display time are recorded in the ES map table 134, as this address information, i.e. as the ES address information 134d, so that the data amount is reduced.

Due to this construction, the elementary stream packet ID (ES_PID) of the actual elementary stream can be obtained from the index number of the ES map 134 designated in the AU table 131. Furthermore, since the address information of the elementary stream corresponding to the elementary stream packet ID can be obtained at the same time, so that the object data can be reproduced on the basis of these informations.

Particularly in this embodiment, in the AU information 132I in the AU table 131, the information about the switch units, such as "switch unit identification (ID) information" and "switch unit type", is recorded as part of the AU attribute information. Furthermore, also in other informations in the AU table 131, the record position of the switch unit address table is recorded. Here, the "switch unit identification information" is information to identify whether or not any switch unit, which allows the angle reproduction, is used in each AU. Furthermore, the "switch unit type" is identification information to indicate whether the switch unit address table 135 (see the lower column of FIG. 25) defines the switch units (switch unit boundary or section), or whether the address information (see FIG. 26 and FIG. 27 discussed later) stored in the navigation packet for the reproduction control defines the switch units (switch unit boundary or section). Furthermore, the "record position of the switch unit address table" is address information to indicate the record position of the switch unit address table 135 shown in the lower column of FIG. 25, in the corresponding object information file 130.

Particularly in this embodiment, in addition to the above, the ES map table 134 is recorded with using the switch units. That is, with regard to the indexes #5 to #7 corresponding to three video streams compatible with the angle switching, the table number information 134SA5 of the switch unit address table 135 indicating a boundary or section of the corresponding switch unit is recorded.

As shown in the lower column of FIG. 25, from among the switch unit address tables 135 usually existing in plural, the switch unit address table #1 designated by the table number information 134SA in the ES map table 134 includes the information indicating the packet numbers of the head addresses and other information for each of five switch units #1 to #5. Incidentally, each head address is indicated by each packet number, but may be indicated by each PTS.

Thus, according to the data structure of the optical disc 100 discussed with reference to FIG. 23 to FIG. 25, the switch unit boundary or section can be identified easily and quickly, by referring to, through the AU table 131 and the ES map table 134, the switch unit address tables 135 constructed in the object information file 130, when the information record reproduction apparatus 500 performs the angle switching during the reproduction. Then, it is possible to perform the angle switching seamlessly, by the unit of the switch unit identified as such.

Additionally, according to the data structure of the optical disc 100 as mentioned above, even if a new title is added to the optical disc 100, the required information can be added easily. This is very advantageous. On the contrary, even in a case that some information becomes useless, as a result of editing for example, it is advantageous that the information does not need to be deleted actually from the table, insofar as the information is not used (referred to).

Next, an explanation is made on a specific example of the navigation packet or the like used for performing the angle switching operation in this embodiment, with reference to FIG. 26 and FIG. 27. Here, FIG. 26 is a conceptual view indicating a fundamental data structure of the address information of the switch unit. FIG. 27 is a conceptual view indicating a specific example of a data structure of the address information of the switch unit, in the specific example of FIG. 23.

In this embodiment, the address information of the switch unit may be stored in the navigation packet disposed at the head of each switch unit, instead of or in addition to the switch unit address table 135 shown in FIG. 25. For example, in the specific example of FIG. 22, the packet numbers #21 and #48 are defined as navigation packets, in which the address information of the switch unit is stored, respectively.

As shown in FIG. 26, the address information of the switch unit address information stored in the navigation packet includes the general information, the anterior switch unit address information, the posterior switch unit address information and other information.

Here, the "general information" indicates a switch unit number representative of a serial number (identification number) of a switch unit having the navigation packet disposed at the head thereof; the total number of the addresses of the anterior switch units (e.g. in past on the reproduction time scale) stored in the navigation packet; the total number of the addresses of the posterior switch units (e.g. in future on the reproduction time scale) stored in the navigation packet, and so on.

The "anterior switch unit address information" indicates the head address of the one-anterior switch unit, ..., the head address of the M-unit-anterior switch unit (M is natural number more than 1 but including 1). On the other hand, the "posterior switch unit address information" indicates the head address of the one-posterior switch unit, ..., the head address of the N-units-posterior switch unit (N is natural number more than 1 but including 1). Here, M and N may be the same, or may be different from each other. Furthermore, their values may be set to relatively large values, insofar as the processing load to read the navigation packet does not become excess. Particularly, increasing the anterior units number (N) is advantageous to perform the angle switching during the reproduction. For example, if this N value is large, the angle switching can be performed easily and quickly at the next-coming switch unit boundary by identifying the boundary near (anterior in particular) the presently reproduced switch unit, when the user inputs an instruction for the angle switching. Furthermore, these M and N may be fixed, or may be variable.

FIG. 27 shows a specific example of the address information of the switch unit stored in the navigation packet shown in FIG. 26, in the switch unit construction of FIG. 23. This specific example is constructed in the navigation packet arranged as a packet having the packet number #21. In this specific example, the "anterior switch unit address information" indicates the head address (packet number) "#0" of the one-anterior (i.e., last) switch unit. On the other hand, the "posterior switch unit address information" indicates the head address "#48" of the one-posterior (i.e., next) switch unit, the head address "#63" of the two-posterior switch unit, and the head address "#100" of the three- posterior switch unit.

Thus, according to the data structure of the optical disc 100 discussed above with reference to FIG. 26 and FIG. 27, the switch unit boundary or section can be identified easily and quickly, with reference to the switch unit address information constructed in the navigation packet, when the information record reproduction apparatus 500 performs the angle switching during the reproduction. Then, it is possible to perform the angle switching seamlessly, by the unit of the switch unit identified as such.

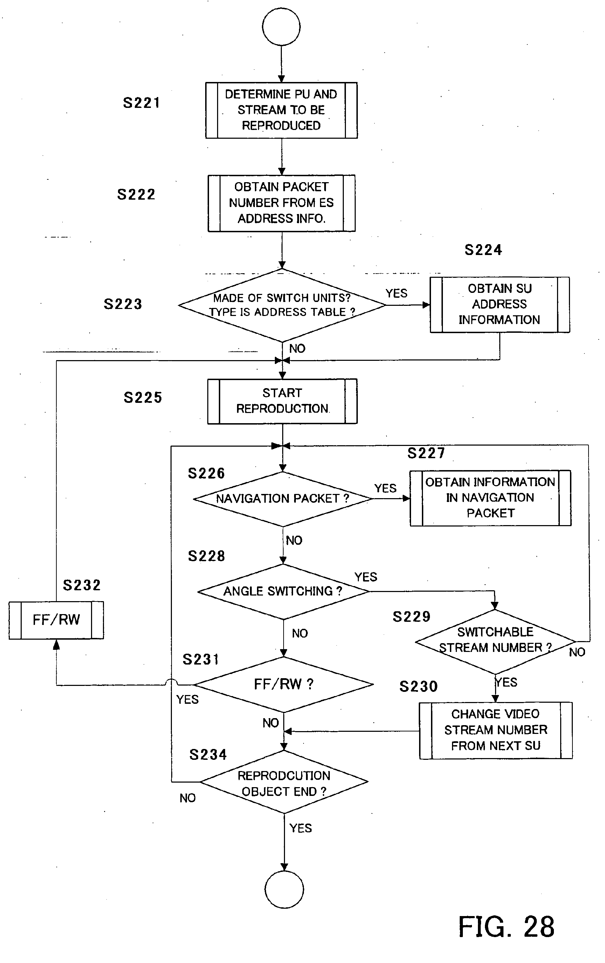

Now, an explanation is made on the reproduction operation or processing of the object including the angle switching operation or processing in this embodiment, with reference to a flow chart of FIG. 28. The angle switching shown in FIG. 28 is performed as a part of the object reproduction (step S216) in the title reproduction already discussed with reference to FIG. 19.

Incidentally, in this embodiment, the angle switching is performed at the switch unit boundary, with using at least one of the switch unit address information in the navigation packet discussed with reference to FIG. 26 and FIG. 27, and the switch unit address information in the switch unit address table 135 discussed with reference to FIG. 23 to FIG. 25.

In FIG. 28, the object information file 130 and the like is firstly referred to, so that the to-be-reproduced PU and the to-be-reproduced video stream and audio stream are determined (step S221). Then, the ES address information is referred to, so that the to-be-reproduced packet number is obtained (step S222). Furthermore, it is judged whether or not the to-be-reproduced TS object 142 consists of the switch units, and the switch unit type is an address table (step S223). That is, it is judged whether or not the switch unit address table 135 shown in the lower column of FIG. 25 is employed. These processings are performed by referring to the AU table 131 and the ES map table 134 shown in the upper and mid columns of FIG. 25.

If the switch unit type is the address table (step S223: Yes), the switch unit address table 135 shown in the lower column of FIG. 25 is referred to, so that the switch unit address information is obtained (step S224). Then, the reproduction of the packet number obtained at the step S222 is started (step S225).

On the other hand, at the judgement of the step S223, it is judged that the to-be-reproduced TS object 142 does not consist of the switch units, or the switch unit type is not the address table (step S223: No), the reproduction of the packet number obtained at the step S222 is directly started (step S225).

Then, it is judged whether or not the reproduced packet is the navigation packet (step S226). This judgement may be performed with reference to the identification information specific to the navigation packet. If the reproduced packet is the navigation packet (step S226: Yes), the information in the navigation packet is obtained (step S227). Particularly in this case, if the switch unit address information shown in FIG. 26 and FIG. 27 is stored, this information is also obtained.

Then, it is judged whether or not the "angle switching" is instructed via the remote controller from the user (step S228). On the other hand, if it is judged at the step S226 that the presently reproduced packet is not the navigation packet (step S226: No), then it is directly judged whether or not the angle switching is instructed (step S228).

If the angle switching is instructed (step S228: Yes), it is judged whether or not the video stream having a switchable stream number is presently reproduced, i.e. whether or not the video stream compatible with the angle switching is presently reproduced (step S229).

Then, if the video stream having the switchable stream number is presently reproduced (step S229: Yes), this video stream is not immediately switched to another video stream, but the video stream number to be reproduced is changed after the next switch unit (SU) (step S230). That is, the angle switching is performed at the next switch unit boundary.

On the other hand, if it is judged from the judgement at the step S229 that the presently reproduced is not the video stream having the switchable stream number (step S229: No), the angle switching is judged as impossible and the process goes back to the step S226 to repeat the following processings.

On the other hand, if the angle switching is not instructed at the judgement of the step S228 (step S228: No), then it is judged whether or not "fast forward/fast rewind" is instructed via the remote controller from the user (step S231).

If the "fast forward/fast rewind" is instructed (step S231: Yes), after the "fast forward/fast rewind" is executed (step S232), the process goes back to the step S225, to repeat the following processings.

On the other hand, if the "fast forward/fast rewind" is not instructed at the step S231 (step S231: No), or if the video stream number is changed at the step S230, it is judged whether or not the reproduction object is completed (step S234).

Then, if the reproduction object is not completed (step S234: No), the process goes back to the step S226 to repeat the following processings. On the other hand, if the reproduction object is completed (step S234: Yes), a series of processings is terminated.

As discussed above, in this embodiment, the switch unit address information in the switch unit address table 135 is obtained at the step S224. Alternatively, instead of or in addition to this, the switch unit address information in the step S227 is obtained. Then, with using the switch unit address information obtained as such, the seamless angle switching can be achieved at the switch unit boundary at step S230.

As explained in detail with reference to FIG. 20 to FIG. 28, in this embodiment, the seamless angle switching can be achieved without using the interleave.

### (Access Flow on Reproduction)

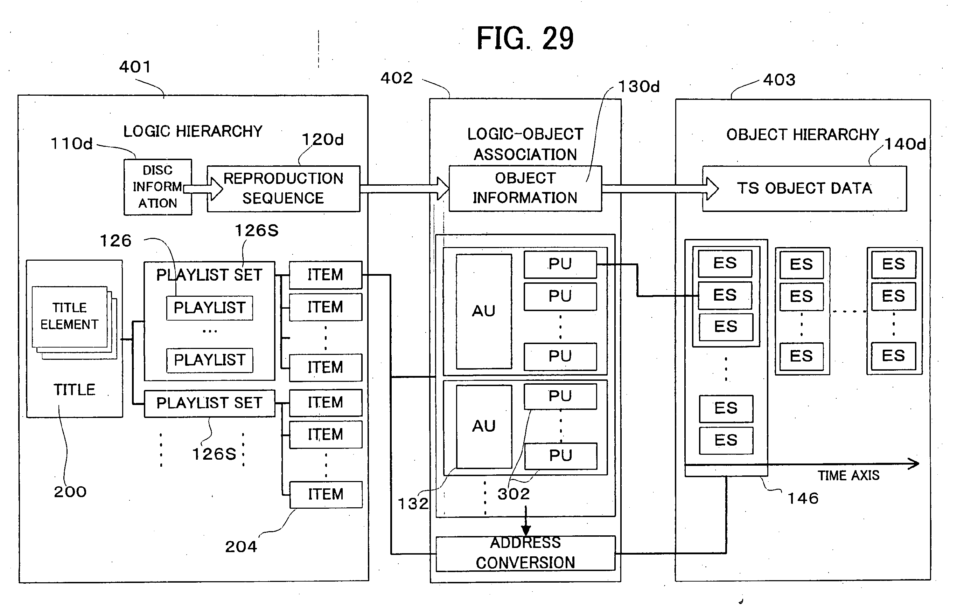

Next, with reference to FIG. 29, the access flow on reproduction by the information record reproduction apparatus 500, employing the AU information 132 and the PU information 302, is explained as one of the features of this embodiment, with the logical structure of the optical disc 100. FIG. 29 schematically illustrates an entire access flow on reproduction, in relation to the logical structure of the optical disc 100.

In FIG. 29, the logical structure of the optical disc 100 is categorized roughly into the following three hierarchies: a logic hierarchy 401; an object hierarchy 403; and a logic-object association hierarchy 402 mutually associating those two hierarchies.

Among them, the logic hierarchy 401 is a hierarchy for logically specifying various logical information to reproduce the desired title during the reproduction, as well as the play list (P list) to be reproduced and its constitutional contents. In the logic hierarchy 401, disc information 110d indicating the entire titles 200 and the like on the optical disc 100 is written within the disc information file 110 (see FIG. 3), and further, reproduction sequence information 120d of the entire contents on the optical disc 100 is written within the play list information file 120 (see FIG. 3). More specifically, the construction of one or more play list sets 126S is written, as the reproduction sequence information 120d, respectively for one or more title elements 200-2 included in each title 200. Furthermore, each play list set 126S includes one or more play lists 126, in each of which the -construction of one or more items 204 (see FIG. 13) is written. Then, at the time of the access during the reproduction, the logic hierarchy 401 as described above specifies the title 200 to be reproduced, the play list 126 corresponding to this, and further the item 204 corresponding to this.

Next, the logic-object association hierarchy 402 is a hierarchy for specifying the attribute and the physical storage address of the TS object data 140d to be reproduced, so as to specify the combination and/or the construction of the TS object data 140d as the entity data and perform an address conversion to the object hierarchy 403 from the logic hierarchy 401, on the basis of the information specified in the logic hierarchy 401 as described above. More specifically, in the logic-object association hierarchy 402, the object information data 130d, which separates a group of the contents composing each item 204 into units of the AU 132 and which finely separates each AU 132 into units of the PU 302, is written in the object information file 130 (see FIG. 3).

Here, the "PU (Presentation Unit) 302" is a unit associating and uniting a plurality of elementary streams by the reproduction switchable unit. If there are three audio streams in the PU 302, the user can freely switch these three audio (e.g. audio for each language), during the reproduction of this vision.

On the other hand, the "AU (Associate Unit) 132" is a unit uniting a plurality of elementary streams such as video streams in the TS object used in one title, and made of one or more PUs 302. More specifically, it is a unit uniting the elementary stream packet IDs (ES_PID) for each TS object, indirectly via the PU 302. This AU 132 corresponds to an assembly made of a plurality of programs having a specific inter-relationship in view of the contents, such as a plurality of programs switchable to each other in the multi-source broadcasting. The PUs 302 belonged to the same AU 132 corresponds to one or more elementary stream assemblies each constructing a plurality of programs switchable to each other by the user operation during the reproduction.

Therefore, if the AU 132 to be reproduced is identified, and the PUs belonged to the AU are identified, the elementary stream to be reproduced is identified. That is, a desired elementary stream can be reproduced from the multi-recorded optical disc 100, without using the PAT or the PMT shown in FIG. 12.

Incidentally, a further specific data structure of the AU information 132I and the PU information 302I, each defining the AU 132 and the PU 302, is discussed later in detail.

The elementary stream to be actually reproduced herein is identified or designated by the ES_PID that is a packet ID (see FIG. 12) of the elementary stream, on the basis of the PU information 302. At the same time, the information indicating the start time point and the end time point of the reproduction is converted to the elementary stream address information, and thereby the contents in a specific area (or a specific time range) of a specific elementary stream is reproduced.

Thus, in the logic-object association hierarchy 402, an address conversion is performed from a logical address relating to each item 204 to a physical address relating to each PU 302.

Next, the object hierarchy 403 is a physical hierarchy to reproduce the actual TS object data 140d. In the object hierarchy 403, the TS object data 140d is written within the object data file 140 (see FIG. 3). More specifically, TS packets 146 constructing a plurality of elementary streams (ES) are multiplexed at every time point. The multiplexed packets are disposed on the time scale to form a plurality of elementary streams (see FIG. 11). Then, a plurality of TS packets multiplexed at each time point is associated with a PU 302 identified by the logic-object association hierarchy 402, for each elementary stream. Incidentally, it is possible to associate a plurality of PUs 302 with one elementary stream (e.g. one elementary stream relating to the same audio data is shared, or one elementary stream relating to the same sub-picture data is shared, among a plurality of switchable programs).

Thus, in the object hierarchy 403, the object data is actually reproduced, using the physical address obtained from the conversion in the logic-object association hierarchy 402.

As described above, the three hierarchies shown in FIG. 29 allow making an access to the optical disc 100 during the reproduction.

### (Structure of Each Information File)

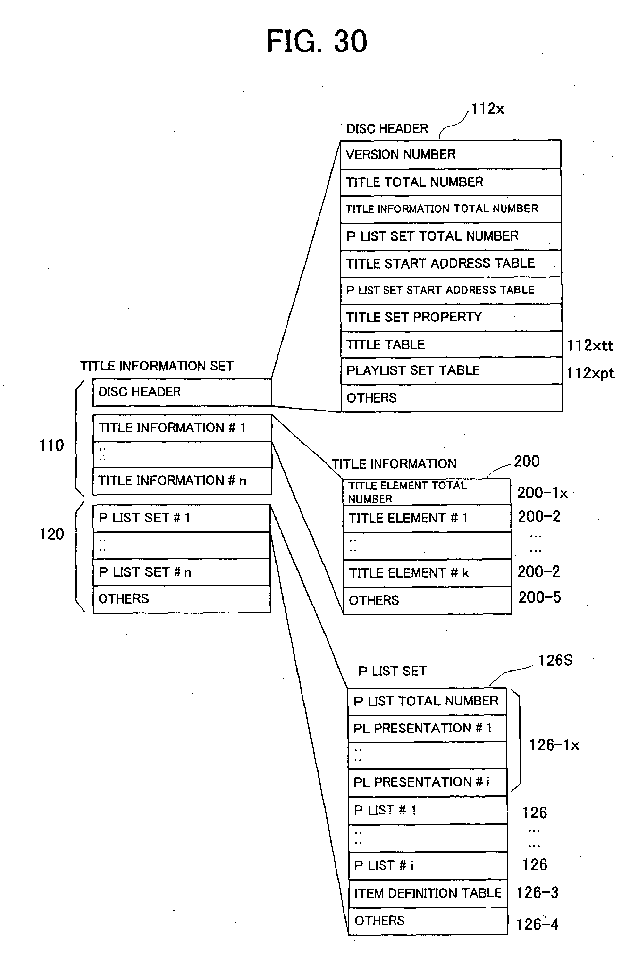

Now, an explanation is made on a specific example of a data structure of various information files constructed on the optical disc 100 in this embodiment, i.e. the data structure of the play list information file 120 and the disc information file 110 discussed with reference to FIG. 3, with reference to FIG. 30 to FIG. 36. Incidentally, the object information file 130 is the same as already discussed with reference to FIG. 25.

With reference to FIG. 30 to FIG. 36, an explanation is made on each constitutional element and a hierarchy structure therebetween or thereamong in specific examples of these files. FIG. 30 to FIG. 36 are conceptual diagrams, schematically showing the hierarchy structures of these files. Incidentally, in FIG. 30 to FIG. 36, the same file, data, information, and the like as those already explained with reference to FIG 3 to FIG. 9 and the like carry the same reference numerals, and the detailed explanations of them are omitted.

Firstly, as shown in FIG. 30, a "title information set" associated with this specific example is an information set including the disc information file 110 and the play list information file 120, shown in FIG. 3 and the like.

The title information set is provided with: one disc header 112x; a plurality of title information 200 (title information #1, ..., #n); a plurality of play list (P list) sets 126S (P list sets #1, ..., #n); and other information.

### (1) Disc Header:

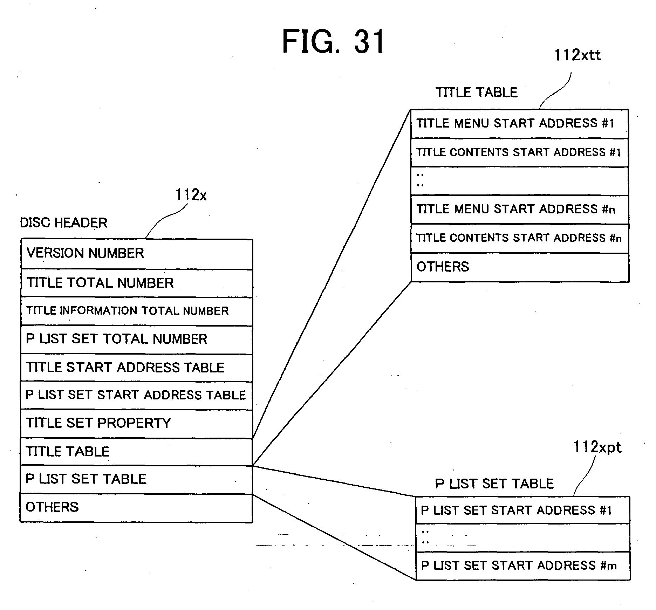

Firstly, from among the title information set shown in FIG. 30, the disc header 112x is explained with reference to FIG. 30 and FIG. 31.

In FIG. 30, the disc header 112x is shown in a branched form on the upper right of the figure, and has a plurality of fields for various information, such as a version number, the title total number, the title information total number, and the play list (P list) set total number, in order from the top in FIG. 30, as information corresponding to the disc general information 112 shown in FIG. 3. The disc header 112x has: a title start address table, as a table for information corresponding to the title pointer 114-1 shown in FIG. 3; and a play list (P list) set start address table, as a table for information corresponding to the play list set pointer 124 shown in FIG. 3. The disc header 112x has a field for information which indicates a title set attribute for indicating the attribute of each title set. Moreover, the disc head 112x has a title table 112xtt and a play list set table 112xpt.

As described above, the disc header 112x having the plurality of fields and tables is to collectively manage a plurality of titles of the entire recording area on the disc.

Here, the "version number" is a version number in the standard, and according to ISO 646, it is regarded as a code "0070", for example. The "title total number " is the total number of the titles of the entire recording area on the disc, and the "title information total number" is the total number of the title information of the entire recording area on the disc. The "play list set total number" is the total number of the play list sets of the entire recording area on the disc, and the "title start address table" indicates the start address of each title, as a relative byte number from the head of the title set. This byte number is counted from zero, for example. The "play list set start address table" indicates the start address of each play list set, as a relative byte number from the head of the title set. This byte number is counted from zero, for example. The "title set attribute" indicates the attribute of the title set, such as the data length of the title set, the type of language used in the title set (Japanese, English, etc.), and the name of the title set.

In FIG. 31, the title table 112xtt is shown in a branched form on the upper right of the figure, and has a plurality of fields for recording a plurality of title menu start address information #1,..., #n, and a plurality of title content start address information #1, ..., #n, in such a form that they make pairs for each number, in order from the top of the figure.

Here, the "title menu start address" indicates the start address of the title information including each title menu, as a relative byte number from the head of the title set. This byte number is counted from zero, for example. The title menu start address "0" is assigned to the disc menu about the entire disc. The "title contents start address" indicates the start address of the title information including each contents title, as a relative byte number from the head of the title set. Here, the "contents title" is a title for indicating the contents of each title. This byte number is counted from zero, for example. The title contents start address "0" is assigned to a first play title which is unconditionally reproduced at the initial stage of the title reproduction, for example.

In FIG. 31, the play list set table 112xpt is shown in a branched form on the lower right of the figure, and has a plurality of fields for recording a plurality of play list (P list) set start addresses #1, ..., #m.

Here, the "play list set start address" indicates the start address of each play list set, as a relative byte number from the head of the title set. This byte number is counted from zero, for example.

### (2) Title Information:

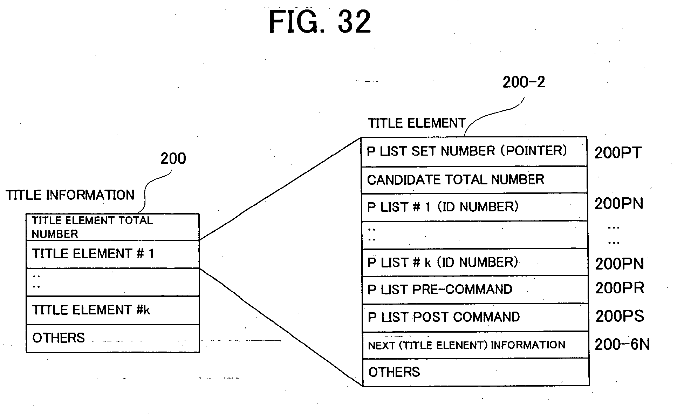

Next, from among the title information set shown in FIG. 30, the title information 200 is explained with reference to FIG. 31 and FIG. 32.

In FIG. 30, the title information 200 is shown in a branched form on the center right of the figure, and has a field for recording information 200-1x which indicates the total number of the title elements corresponding to the title general information 200-1 shown in FIG. 4, and further, a plurality of fields for recording the plurality of title elements 200-2 (title elements #1, ..., #k) and the other information 200-5, in order from the top in FIG. 30.

Here, the "title element total number" indicates the total number of the title elements included in the title information.

In FIG. 32, each title element 200-2 is shown in a branched form on the right of the figure, and has a plurality of fields for recording the pointer 200PT in which a "play list set number" is written, the candidate total number, and P list identification information 200PN in which one or more available play list (P list) numbers (i.e. P lists #1, ..., #k) is written, in order from the top in FIG. 32. Moreover, it has a plurality of fields for recording the P list pre-command 200PR, the P list post command 200PS, the next information 200-6N and the like for indicating the title element to be reproduced next. Incidentally, the other information in the title element 200-2 is information about each title element, such as the title type, for example, a sequential type and a branch type or the like.

Here, the "pointer 200PT in which the play list set number is written" is a pointer for indicating the identification (ID) number of the play list set. The "candidate total number" indicates the total number of the play list which can be a selection candidate of the title element in the play list set specified by the pointer 200PT. The "P list identification information 200PN" indicates the ID (identification) number of one or more play lists which can be the selection candidate. By providing such P list identification information 200PN, it is possible to include the play list which can be the selection candidate for the reproduction of different titles, in one play list set, and it is possible to share the one play list set with different title elements. On the other hand, the "P list pre-command 200PR", the "P list post command 200PS", and the "next information 200-6N", and the like are the same as described above.

### (3) Play List Set:

Next, from among the title information set shown in FIG. 30, the play list set 126S is explained with reference to FIG. 30 and FIG. 33 to FIG. 36.

In FIG. 30, the play list set 126S is shown in a branched form on the lower right of the figure, and has fields for recording information 126-1 which includes the play list (P list) total number and a plurality of play list (PL) presentations (PL presentations #1, ..., #i), as information corresponding to the play list set general information 126-1 shown in FIG. 5, in order from the top in FIG. 30. Moreover, the play list set 126S has a plurality of fields for recording the plurality of play lists (P lists) 126 (i.e. P lists #1, ..., #i), the item definition table 126-3, and the other information 126-4.

Here, the "play list total number" indicates the total number of the play lists in the play list set. The PL presentations #1, ..., #i are attribute information corresponding to the P lists #1, ..., #i, respectively, and correspond to the attribute information shown in FIG. 23.

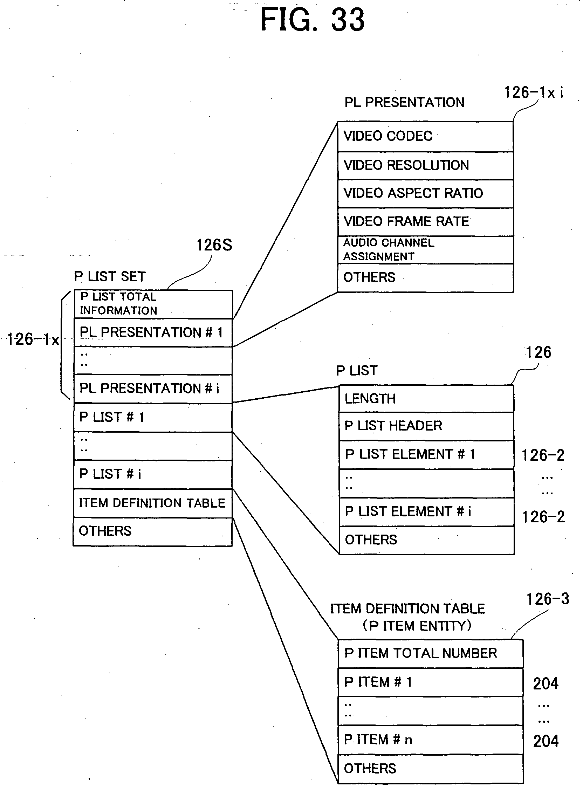

As shown in FIG. 33, each PL presentation 126-1xi is shown in a branched form on the upper right of the figure, and has a plurality of fields for recording information which indicates a video codec, video resolution, a video aspect ratio, a video frame rate, an audio channel assignment and so on, in order from the top in FIG. 33.

Here, the "video codec" is used in recording the video information associated with the play list set, and thus indicates the type of the video codec to be used in reproducing it. The "video resolution" indicates video resolution used in recording the video information associated with the play list corresponding to the main pass (i.e. the video stream for providing the video) from among the play list set. The "video aspect ratio" indicates a video aspect ratio used in recording the video information associated with the play list corresponding to the main pass from among the play list set. The "video frame rate" indicates a video frame rate used in recording the video information associated with the play list corresponding to the main pass from among the play list set. The "audio channel assignment" indicates the assignment of an audio channel used in recording the audio information associated with the play list corresponding to the main pass from among the play list set.

In FIG. 33, each play list 126 is shown in a branched form on the center right of the figure, and has a plurality of fields for recording information which indicates the data length of the play list 126, a play list header, the plurality of play list elements 126-2 (i.e. P list elements #1, ..., #i) and the like, in order from the top in FIG. 33.

Here, the "length" of the play list indicates the length of the play list continuing to the next, with the byte number. This indicates the length of the data which does not include the field itself. The "play list header" indicates information about the total number of the play list elements included in the play list, the reproduction time length of the play list, the name of the play list, and the like.

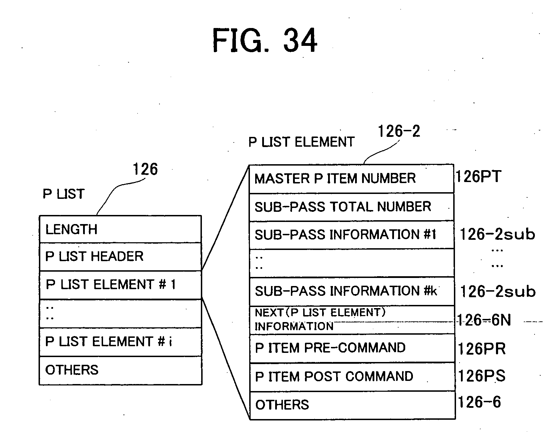

Moreover, in FIG. 34, each play list element 126-2 is shown in a branched form on the right of the figure, and has a plurality of fields for recording the pointer 126PT which indicates the item number of a master play item (master P item), the sub pass total number, a plurality of sub pass information 126-2sub (i.e. sub pass information #1, ..., #k), the next information 126-6N, the pre-command 126PR about the play item (P item), the post command 126PS about the play item (P item), and the other information 126-6, and the like.

Here, the "pointer 126PT", the "pre-command 126PR", and the "post command 126PS" are the same as described above. Moreover, the "sub pass total number" indicates the total number of the sub passes which exist in the play list element. The "next information 126-6N" indicates the play list element to be reproduced next.

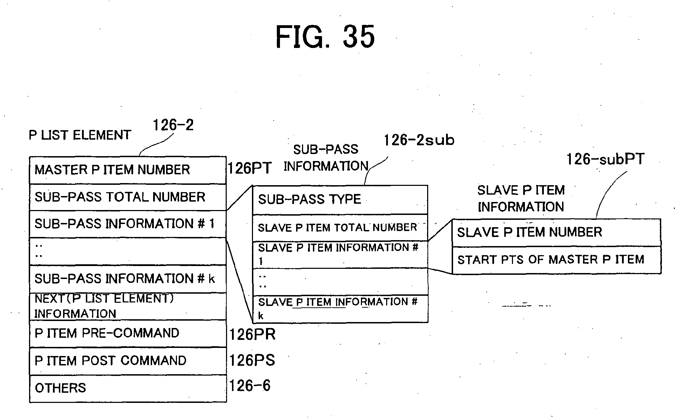

Moreover, in FIG. 35, each sub pass information 126-2sub is shown in a form branched to the right toward the center, in the figure, and has a plurality of fields for recording a sub pass type, the slave play item (slave P item) total number, and a plurality of slave play item (slave P item) information 126-subPT (i.e. slave P item information #1, ..., #k), in order from the top in the figure.

Here, the "sub pass type" indicates what type of display is performed by the sub pass, such as various menu display. The "slave P item total number" indicates the total number of slave play items of the sub pass.

Each slave play item (slave P item) information 126-subPT is shown in a form branched toward the right end from the center in the figure, and has a plurality of fields for recording a slave play item (slave P item) number and a start PTS of the master play item (master P item), in order from the top in the figure.

Here, the "slave P item number" indicates the ID (identification) number of the play item of the sub pass. The "start PTS (Presentation Time Stamp) of the master play item" indicates the reproduction time point of the slave item on the reproduction time scale of the master play item.

On the other hand, in FIG. 33, the item definition table 126-3 is shown in a branched form toward the lower right of the figure, and has a plurality of fields for recording the play item (P item) total number, and a plurality of play items (P items) 204 (i.e. P items #1, ..., #n), and the like, in order from the top in the figure.

Here, the "play item total number" indicates the total number of the items 204 on the item definition table.

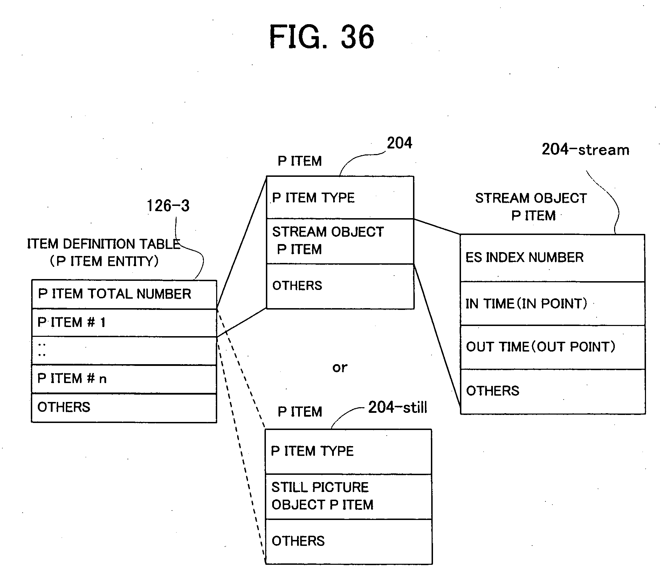

In FIG. 36, each item 204 is shown in a branched form to the upper right side toward the center of the figure, and has a plurality of fields for recording a play item (P item) type, a stream object play item (P item) 204-stream, and the like, in order from the top in the figure.

Here, the "play item (P item) type" indicates the type of the play item. For example, in the case of the item for the stream object for the moving picture or video, it is set to a code "00h", and in the case of the item for the stream object for the still picture, it is set to a code "10h". In the case of the item for the object for various menus, it is set to a code "20h".

Moreover, the stream object play item (P item) 204-stream is shown in a form branched to the right end from the center in the figure, and has information for indicating an ES (Elementary Stream) index number, an IN time (IN point), an OUT time (OUT point), and the like, which are related to each play item, in order from the top in the figure.

Here, the "ES index number" indicates the ID (identification) number and the type of the elementary stream to which the IN time and the OUT time are applied. Moreover, the "IN time (IN point)" and the "OUT time (OUT point)" are as descried above, and the reproduction time point and the end time point of the item are written on a time basis of 90kHz, for example.

Incidentally, in FIG. 36, the item definition table 126-3 may include an item 204-still for the still picture object, in place of such an item 204 for the stream object, i.e. the item 204 for the moving picture or video. In this case, the item 204-still has information for indicating the type of the play item, a still picture object play item (P item), and the like.

Incidentally, the data amount of each of the title information set explained above may be a fixed byte or a variable byte. Moreover, each field may have a structure in which a required number of each table can be added.

Now, an explanation is given, regarding the reproduction order of various files or the like, in the reproduction of the optical disc 100 having such a data structure as the one specific example, explained with reference to FIG. 30 to FIG. 36.

Firstly, the disc header 112x is reproduced out of the title information set shown in FIG. 30. As a part of that, the title table 112xtt shown in FIG. 31 is reproduced, and from it, the title menu start address or title contents start address is obtained.

Next, in accordance with the obtained address information, the reproduction of the title information 200 shown in FIG. 30 is started. More specifically, the reproduction of the title element 200-2 shown in FIG. 32 is performed, to thereby obtain the play list set number. Moreover, the pointer 200PT to the play lists #1 to #k is obtained. Incidentally, by adopting such a construction that the play list 126 is specified by the pointer 200PT, it is possible to share, among the plurality of titles, the plurality of play lists which is in the play list set specified by the reproduction of the title element 200-2 in advance.

Next, the play list set table 112xpt shown in FIG. 31 is reproduced, to thereby obtain the play list set start address. On the basis of this, the reproduction of the play list set 126S shown in FIG. 33 is started, and the PL presentation 126-1xi is firstly reproduced.

Then, the PL presentation 126-1xi, one example of the required function information, is compared with the reproduction function (i.e. video performance, audio performance, and the like) of the information reproduction system during the reproduction of the optical disc 100, and thus, one optimum play list 126 is selected from the play list set 126S shown in FIG. 33.

Next, the selected play list 126 is reproduced. More specifically, the play list element 126-2 shown in FIG. 34 is reproduced. At this time, firstly, the pre command 126PR is executed, then, the master P item number shown in FIG. 35 is obtained. Then, the Item definition table shown in FIG. 36 is referred to, to thereby reproduce the relevant Item 204. The reproduction of this -Item 204 is performed by reproducing the relevant TS object in accordance with the ES index number, the IN time, and the OUT time, which are obtained by reproducing the stream object P item 204-stream (see FIG. 25). Then, the post command 126PS shown in FIG. 34 is executed. Moreover, the play list element to be reproduced next is specified in accordance with the next information 126-6N, and its reproduction is repeated in the same manner.

As explained in detail with reference to FIG. 1 to FIG. 36, according to this embodiment, this embodiment allows a seamless angle switching without using any interleave.

Incidentally, in the aforementioned embodiment, the explanation is made on the optical disc 100 as an example of the information record medium and the recorder or player of the optical disc 100 as an example of the information record reproduction apparatus. Nevertheless, the present invention is not limited to the optical disc and the player or recorder thereof, but is applicable to various record media and the recorders or players thereof, supporting other high density recording or high transfer rate.

The present invention is not limited to the above-described embodiments, and various changes may be made, if desired, without departing from the essence or spirit of the invention which can be read from the claims and the entire specification. An information record medium, an apparatus for and a method of recording the information, an apparatus for and a method of reproducing the information, an apparatus for and a method of recording and reproducing the information, a computer program for controlling the record or the reproduction, and a data structure including a control signal, all of which involves such changes, are also intended to be within the technical scope of the present invention.

### Industrial Applicability

An information record medium, a apparatus for and a method of recording the information, an apparatus for and a method of reproducing the information, an apparatus for and a method of recording and reproducing the information, a computer program for controlling the record or the reproduction, and a data structure including a control signal, all of which are according to the present invention, can be applied to a high-density optical disc for consumer or industrial use, such as a DVD, on which various information, such as the video information, the audio information and the sub-picture information, can be recorded at high density and further can be applied to a DVD player, a DVD recorder, and the like. Moreover, they can be applied to an information record medium, an information record reproduction apparatus, or the like, which are mounted on or can be connected to various computer equipment for consumer or industrial use, for example.

## Claims

1. An information record medium onto which a whole stream including a plurality of partial streams each comprising a series of content information is multi-recorded by a unit of a packet that is a physically accessible unit, said medium comprising:
an object data file for storing object data comprising a plurality of packets each storing a piece of the content information and being multiplexed by the unit of the packet; and
an object information file for storing association definition information to define a relationship between multiplexed packets and the plurality of partial streams, as reproduction control information to control a reproduction of said object data file, wherein
the plurality of partial streams include a plurality of video streams comprising a plurality of angle video informations corresponding to a plurality of viewpoints,
each of the plurality of angle video informations comprises an assembly of minimum image units, which are individually reproducible and defined by a predetermined standard,
each of the minimum image units is divided and stored into the packets in said object data file, and
in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

2. The information record medium according to claim 1, wherein the minimum image unit is a GOP (Group of Picture) based on a MPEG (Moving Picture Experts Group) standard.

3. The information record medium according to claim 1, wherein the switch unit is defined by position information, the position information indicating a head address of the switch unit.

4. The information record medium according to claim 3, wherein the position information is stored for each switch unit, in a switch unit address table constructed in said object information file.

5. The information record medium according to claim 3, wherein the position information is stored for each switch unit, in a navigation packet forming a part of the partial streams in said object data file.

6. The information record medium according to claim 5, wherein the position information as for anterior n (n is natural number equal to or more than 1) switch units and posterior m (m is natural number equal to or more than 1) switch units, with respect to a switch unit to which the navigation packet is belonged as a standard, is stored in the navigation packet.

7. The information record medium according to claim 5, wherein the navigation packet is arranged as a head packet of the switch unit.

8. The information record medium according to claim 3, wherein the position information is a serial number of the packets or a PTS (Presentation Time Stamp).

9. The information record medium according to claim 1, wherein the association definition information has table information, the table information indicating, for each partial stream, packet identification numbers assigned specifically to a plurality of packets multiplexed at a same time.

10. The information record medium according to claim 1, further comprising a reproduction sequence file for storing reproduction sequence information to define a reproduction sequence of the object data.

11. An information record apparatus for multi-recording a whole stream including a plurality of partial streams each comprising a series of content information by a unit of a packet that is a physically accessible unit, onto an information record medium, said apparatus comprising:
a first record device for recording an object data file, the object data file-storing object data comprising a plurality of packets each storing a piece of the content information and being multiplexed by the unit of the packet; and
a second record device for recording an object information file, the object information file storing association definition information to define a relationship between multiplexed packets and the plurality of partial streams, as reproduction control information to control a reproduction of said object data file, wherein
the plurality of partial streams include a plurality of video streams comprising a plurality of angle video informations corresponding to a plurality of viewpoints,
each of the plurality of angle video informations comprises an assembly of minimum image units, which are individually reproducible and defined by a predetermined standard,
each of the minimum image units is divided and stored into the packets in said object data file, and
in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

12. An information record method of multi-recording a whole stream including a plurality of partial streams each comprising a series of content information by a unit of a packet that is a physically accessible unit, onto an information record medium, said method comprising:
a first record process of recording an object data file, the object data file storing object data comprising a plurality of packets each storing a piece of the content information being multiplexed by the unit of the packet; and
a second record process of recording an object information file, the object information file storing association definition information to define a relationship between multiplexed packets and the plurality of partial streams, as reproduction control information to control a reproduction of said object data file, wherein
the plurality of partial streams include a plurality of video streams comprising a plurality of angle video informations corresponding to a plurality of viewpoints,
each of the plurality of angle video informations comprises an assembly of minimum image units, which are individually reproducible and defined by a predetermined standard,
each of the minimum image units is divided and stored into the packets in said object data file, and
in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.

13. An information reproduction apparatus for reproducing the information record medium according to claim 1, said apparatus comprising:
a reproduction device for reproducing said object data file and said object information file;
an input device for inputting externally an instruction for an angle switching; and
a control device for controlling the reproduction device to reproduce a video stream relating to one angle video information in said object data file, on the basis of the association definition information included in said object information file reproduced by said reproduction device, and to switch from a reproduction of a video stream relating to said one angle video information to a reproduction of a video stream relating to another angle video information, at a boundary of the switch unit, in accordance with the instruction for the angle switching inputted via said input device.

14. An information reproduction method of reproducing the information record medium according to claim 1 and implemented by an information reproduction apparatus having (i) a reproduction device for reproducing said object data file and said object information file and (ii) an input device for inputting externally an instruction for an angle switching, said method comprising:
a first control process of controlling the reproduction device to reproduce a video stream relating to one angle video information in said object data file, on the basis of the association definition information included in said object information file reproduced by said reproduction device, and
a second control process of controlling the reproduction device to switch from a reproduction of a video stream relating to said one angle video information to a reproduction of a video stream relating to another angle video information, at a boundary of the switch unit, in accordance with the instruction for the angle switching inputted via said input device.

15. An information record reproduction apparatus for multi-recording and reproducing a whole stream including a plurality of partial streams each comprising a series of content information by a unit of a packet that is a physically accessible unit, onto an information record medium, said apparatus comprising:
a first record device for recording an object data file, the object data file storing object data comprising a plurality of packets each storing a piece of the content information and being multiplexed by the unit of the packet; and
a second record device for recording an object information file, the object information file storing association definition -information to define a relationship between multiplexed packets and the plurality of partial streams, as reproduction control- information to control a reproduction of said object data file, wherein
the plurality of partial streams include a plurality of video streams comprising a plurality of angle video informations corresponding to a plurality of viewpoints,
each of the plurality of angle video informations comprises an assembly of minimum image units, which are individually reproducible and defined by a predetermined standard,
each of the minimum image units is divided and stored into the packets in said object data file, and
in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit,
said apparatus further comprising:
a reproduction device for reproducing said object data file and said object information file;
an input device for inputting externally an instruction for an angle switching; and
a control device for controlling the reproduction device to reproduce a video stream relating to one angle video information in said object data file, on the basis of the association definition information included in said object information file reproduced by said reproduction device, and to switch from a reproduction of a video stream relating to said one angle video information to a reproduction of a video stream relating to another angle video information, at a boundary of the switch unit, in accordance with the instruction for the angle switching inputted via said input device.

16. An information record reproduction method of multi-recording and reproducing a whole stream including a plurality of partial streams each comprising a series of content information by a unit of a packet that is a physically accessible unit, onto an information record medium and implemented by an information record reproduction apparatus having (i) a reproduction device for reproducing an object data file and an object information file and (ii) an input device for inputting externally an instruction for an angle switching, said method comprising:
a first record process of recording the object data file, the object data file storing object data comprising a plurality of packets each storing a piece of the content information and being multiplexed by the unit of the packet; and
a second record process of recording an object information file, the object information file storing association definition information to define a relationship between multiplexed packets and the plurality of partial streams, as reproduction control information to control a reproduction of said object data file, wherein
the plurality of partial streams includes a plurality of video streams comprising a plurality of angle video informations corresponding to a plurality of viewpoints,
each of the plurality of angle video informations comprises an assembly of minimum image units, which are individually reproducible and defined by a predetermined standard,
each of the minimum image units is divided and stored into the packets in said object data file, and
in the object data file, a switch unit as a logical section for an angle switching on a reproduction time scale is defined such that the plurality of packets for dividing and storing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit,
said method further comprising:
a first control process of controlling the reproduction device to reproduce a video stream relating to one angle video information in said object data file, on the basis of the association definition information included in said object information file reproduced by said reproduction device, and
a second control process of controlling the reproduction device to switch from a reproduction of a video stream relating to said one angle video information to a reproduction of a video stream relating to another angle video information, at a boundary of the switch unit, in accordance with the instruction for the angle switching inputted via said input device.

17. A computer program for a record control to control a computer disposed at the information record apparatus according to claim 11, said program making the computer function as at least a part of the first record device and the second record device.

18. A computer program for a reproduction control to control a computer disposed at the information reproduction apparatus according to claim 13, said program making the computer function as at least a part-of the reproduction, device, the input device and the control device.

19. A computer program for a record reproduction control to control a computer disposed at the information record reproduction apparatus according to claim 15, said program making the computer function as at least a part of the first record device, the second record device, the reproduction device, the input device and the control device.

20. A data structure including a control signal, wherein a whole stream including a plurality of partial streams each comprising a series of content information is multi-recorded by a unit of a packet that is a physically accessible unit, said structure comprising:
an object data file for storing object data comprising a plurality of packets each storing a piece of the content information and being multiplexed by the unit of the packet; and
an object information file for storing association definition information to define a relationship between multiplexed packets and the plurality of partial streams, as reproduction control information to control a reproduction of said object data file, wherein
the plurality of partial streams include a plurality of video streams comprising a plurality of angle video informations corresponding to a plurality of viewpoints,
each of the plurality of angle video informations comprises an assembly of minimum image units, which are individually reproducible and defined byon the basis of a predetermined standard and reproducible independently,
each of the minimum image units is divided and stored into the packets in said object data file, and
in the object data file, a switch unit as a logical section for an angle switching on a reproduction time scale is defined so such that the plurality of packets for dividing and storing the divided minimum image unit pieces obtained by dividing a same minimum image unit does not extend over a boundary of the switch unit, and such that a minimum image unit reproducible without using another minimum image unit belonging to an anterior switch unit extending over the boundary of the switch unit is arranged as a first minimum image unit of the switch unit.
